# EUROPÄISCHE PATENTSCHRIFT

(11) **EP 0 693 008 B1**
(45) Veröffentlichungstag und Bekanntmachung des Hinweises auf die Patenterteilung: **03.12.1997**
(21) Anmeldenummer: 94913521.4
(22) Anmeldetag: 03.04.1994
(51) Int. Cl.: B21D 26/02, B21D 15/10, B21D 51/12, B29C 53/00

(54) **BEULVERSTEIFUNG**
STIFFENING BULGING
BOSSELAGE DE RENFORCEMENT

(30) Priorität: 06.04.1993 DE 4311978; 25.01.1994 DE 4401974
(43) Veröffentlichungstag der Anmeldung: 24.01.1996
(73) Patentinhaber: Dr. Mirtsch GmbH, 14513 Berlin (DE)
(72) Erfinder: Mirtsch, Frank, 13465 Berlin (DE)
(74) Vertreter: Kaewert, Klaus
(86) Internationale Anmeldenummer: EP9401043
(87) Internationale Veröffentlichungsnummer: WO9422612

(56) Entgegenhaltungen:
- EP-A- 0 492 860
- DE-A- 2 557 215
- FR-A- 2 527 301
- US-A- 3 706 218
- US-A- 4 027 517

## Beschreibung

### Technisches Gebiet :

Die Erfindung betrifft ein Verfahren zur Beulversteifung dünner Materialbahnen, auch in Form von Folien bei dem die Materialbahnen und Folien dazu in gekrümmter Form beabstandet werden.

Zwecks Einsparung von Materialien werden in vielen Bereichen der Technik Ausrüstungsteile benötigt, die trotz dünner Wände eine hohe Festigkeit bzw. Formstabilität besitzen. Da diese Ausrüstungsteile häufig Bestandteile von verfahrens-, energie- und umwelttechnischen Anlagen sind, sollten die Wände zusätzlich günstige strömungs- und wärmetechnische Eigenschaften besitzen. Dünnwandige formstabile Konstruktionen werden aus Gewichts- und Kostengründen auch in der Lichttechnik, bei der Verpackung, im Design, in der Raumgestaltung und in der Bautechnik benötigt. Hierbei müssen die Folien bzw. dünnen Wände außer der Formsteifigkeit auch gute optische Eigenschaften besitzen.

### Stand der Technik:

Es sind zahlreiche Verfahren bekannt, um dünnen Wänden durch Verformungen der Wände eine erhöhte Formsteifigkeit zu verleihen. Als bekanntes Beispiel werden die eingewalzten Sicken in Dosen oder Fässern genannt. Sicken haben jedoch den Nachteil, daß sie nur eine eindimensionale Formversteifung bewirken. Soll jedoch eine mehrdimensionale Formversteifung der Materialbahn erzeugt werden, sind aufwendige mehrdimensionale Prägeformen erforderlich.
Nachteilig ist bei diesen Formgebungsverfahren, daß die Verformungen der Wände in der Regel auf mechanischem Wege durch Einwalzen oder Einprägen oder auf hydraulischem Wege durch Anpressen an eine Prägeform zustande kommen. Hierdurch wird einerseits die Dicke der Wand verändert,
andererseits wird die Oberflächengüte der verformten Wand gegenüber der ursprünglich glatten Wand herabgesetzt. Nur wenn die Prägeform eine glatte Oberfläche besitzt, deren Herstellung in der Regel sehr aufwendig ist, kann eine glatte Oberfläche der verformten Wand erreicht werden.

Es ist aus der DE-OS 25 57 215 nächster Stand der Technik ein hydraulisches Formgebungsverfahren bekannt, bei dem dünne Wände von Rohren oder zylinderischen Behältern eine gleichmäßige versetzte Beulstruktur dadurch erhalten, daß die zylinderischen Wände auf der Innenseite durch Stützringe oder Stützspiralen abgestützt werden und mittels äußerem Überdruck beulartig verformt werden. Durch dieses hydraulische Formgebungsverfahren, welches quasi frei von mechanischen Berührungen abläuft, wird eine hochwertige Oberflächengüte erzielt. Die gleichmäßig versetzte Beulstruktur der Rohrwände bewirkt weiterhin eine Erhöhung der Formsteifigkeit gegenüber der unverformten glatten Wand. Dieses hydraulische Beulverfahren hat jedoch noch erhebliche Nachteile. Da dieses Verfahren auf Rohr- oder zylindrische Zylinderwände beschränkt bleibt, können keine großflächigen, beulstrukturierten Bleche oder lange, beulstrukturierten Bänder oder Folien mit variablen, geometrischen Abmessungen der Beulstrukturen erzeugt werden.

Um Bleche in eine zylinderische Form mit optimaler Zylindrizität zu biegen, ist weiterhin das Zweiwalzen-Rundbiegeverfahren bekannt. Hierbei werden Bleche um eine Oberwalze geformt, indem die Oberwalze in eine flexible Unterwalze eindringt (deutsche Patentschriften Nr. 1602489, Nr. 1752001 , Nr. 1552017).

Dieses bekannte und viel ältere Zweiwalzen-Rundbiegeverfahren ist vorzugsweise für die Erzeugung zylindrischer Bauteile, die keine strukturierten Wände besitzen, geeignet. Wenn mit dem Zweiwalzen-Rundbiegeverfahren strukturierte, zylindrische Bauteile erzeugt werden sollen, sind einerseits sehr aufwendige Strukturwalzen erforderlich, und andererseits werden die Oberflächengüten der Ausgangsstoffe infolge starker mechanischer Verformungen erheblich beeinträchtigt.

### Darstellung der Erfindung

Aufgabe der vorliegenden Erfindung sind Verfahrensverbesserungen. Es sollen dünne Bleche und Folien mit einer mehrdimensionalen, versetzten Beulstruktur und geringem technischen Aufwand erzeugt und in unterschiedlichen Technologien angewendet werden können. Auch soll eine verbesserte, mehrdimensionale Formsteifigkeit von beulverformten Bauteilen erzielt werden.

Gelöst wird die Aufgabe mit den Merkmalen des Hauptanspruches.

Das Beulen kann hydraulisch mit einem flüssigen Druckmittel oder pneumatisch mit einem gasförmigen Druckmittel oder mittels eines elastischen bzw. nachgiebigen aber sonst festen Druckmittels erfolgen. Die zeitliche Folge der Beulenbildung kann durch einen kontinuierlichen segmentweisen Bearbeitungsvorgang dargestellt werden. Zur Aufbringung eines Druckes mit flüssigem oder gasförmigem Druckmittel wird für eine Abdichtung an den Rändern der jeweils bearbeiteten Fläche gesorgt. Der Beuldruck kann als Überdruck oder als Unterdruck aufgebracht werden. Verschiedene Möglichkeiten zur Aufbringung des Beuldruckes können kombiniert werden.
Die beabstandeten Stützelemente bestehen bevorzugt aus steifen oder flexiblen Spiralen, Ringen, Scheiben oder sonstigen Profilierungen mit in Umfangsrichtung ausgebildeter Schlangen- oder Zickzackform.

Die mit der Erfindung erzielten Vorteile bestehen insbesondere darin, daß dünne Wände oder Folien in einem halbkontinuierlichen oder kontinuierlichen Herstellungsverfahren beulstrukturiert werden können und auf diese Weise großflächige und endlose Materialbahnen mit großer mehrdimensionaler Formsteifigkeit trotz dünner Wanddicke entstehen. Hierzu sind keine aufwendigen Prägeformen erforderlich. Diese Vorteile ergeben sich aus dem folgenden Prinzip:

Werden Stützelemente, z.B. beabstandete Stützringe oder eine Stützspirale, für die Beulstruktierung von zylindrischen Behältern oder gewickelten Blechen bzw. Folien verwendet, wobei ein konzentrischer, äußerer Überdruck und/oder ein innerer Unterdruck wirksam sind, stellen sich Beulstrukturen auf dem ganzen Umfang des Zylindermantels innerhalb kurzer Zeit selbständig ein. Untersuchungen von segmentartigen Beulvorgängen haben bestätigt, daß für die Erzeugung von regelmäßigen, versetzten Beulstrukturen der gesamte Zylinderumfang nicht gleichzeitig verformt werden muß. Erfindungsgemäß ist es deshalb vorgesehen, zeitlich jeweils nur einzelne Segmente in Umfangsrichtung beulartig zu verformen, wobei jedoch das jeweilige druckbeaufschlagte Segment zwei oder mehrere einzelne Beulen in Umfangsrichtung umfassen kann.

Nach einem Ausführungsbeispiel der Erfindung ist vorsehen, daß die zu strukturierende Materialbahn über ein Segment einer Stützwalze, auf der beabstandete Stützelemente angeordnet sind, gebogen wird und in zeitlicher Folge segmentweise durch Überdruck von außen beaufschlagt wird. Hierdurch kann die Umformleistung des Beulverfahrens stark erhöht werden.

Wichtig ist dabei die Unterscheidung zum sogenannten Tiefziehen, bei dem ein Fließen des Materials stattfindet. Beim Tiefziehen wird die Oberflächengröße des Materials als Ergebnis des Ziehens wesentlich erhöht. Das erfindungsgemäße Verfahren kann ohne wesentliche Oberflächenvergrößerung auskommen. Es kann eine Einbeulung stattfinden, die von der Aufbringung der Beulungskräfte zunächst ausreicht, um eine Oberflächenvertiefung zu bewirken, die aber dann als Kraft zu gering ist, um den relativ steifen Rand der Beulung in Vorschubrichtung des Beulens einzudrücken. Dieser Beulenrand widersteht der Verformung. Bei weiterem Vorschub findet die Beulungskraft dann einen Oberflächenbereich mit geringer Widerstandskraft. Dort entsteht eine neue Beule mit gleichem widerstandsfähigem Rand. Es wiederholt sich der vorstehend beschriebene Vorgang. Infolgedessen bilden sich nacheinander bzw. fortlaufend neue Beulen. Im Ergebnis benötgt das erfindungsgemäße Verfahren in Vorschubrichtung keine Beulenkanten bildende Unterstützung. D.h., bei einer Umfahrung in Umfangsrichtung entsteht eine Reihe gleichmäßig am Umfang verteilter Beulen. Vorteilhafterweise bewirkt eine Beulung des sich in Vorschubrichtung (Bildungsrichtung) anschließenden Oberflächenbereiches, daß die dort entstehenden Beulen versetzt zu den ersterzeugten Beulen entstehen. Es bildet sich eine Wabenstruktur mit relativ hoher Biegefestigkeit in jeder Richtung. Werden beabstandete Stützringe oder Stützspiralen als Stützelemente verwendet, entstehen versetzte viereckige Beulen. Die Größe der Beulen ergibt sich aus dem Durchmesser der Stützwalze und dem axialen Abstand der Stützelemente.

Die Tiefe der Beulen stellt sich beim elastischen Beulen selbständig ein und hängt im wesentlichen von der Größe der Beulen und dem Krümmungsradius der beabstandeten Stützelemente während des Beulverformgangs ab. Die Tiefe der Beulen kann dadurch weiter vergrößert werden, daß für eine plastische Vertiefung der Beulen die Verformungstemperatur während des Beulens in den elastischen/plastischen Übergangsbereich angehoben wird, z.B. durch Aufheizen der zu verformenden Materialbahn. Das kann über das Druckmittel oder im Falle metallischer Materialbahnen durch elektrischen Stromfluß bewirkt werden.

Es können ferner durch beabstandeten Stützelemente, die in Umfangsrichtung eine schlangenförmige oder zickzackförmige Form haben, beim Beulvorgang angenähert seckseckförmige oder fünfeckförmige Strukturen der beulverformten dünnen Wand erzeugt werden. Diese Eckstrukturen haben gegenüber der Rechteckstruktur den Vorteil, daß sie aus Symmetriegründen in allen Wandrichtungen eine nahezu gleiche Formsteifigkeit besitzen. Experimentelle Untersuchungen haben bestätigt, daß diese Eckstruktur bei der Beulverformung bevorzugt gebildet wird: Bei der Verwendung flexibler, beabstandeter Stützelemente, die sich etwas in axialer Richtung verschieben können, verformen sich die flexiblen Stützelemente selbständig zickzackförmig. Die

Form der sechseckigen oder fünfeckartigen Beulstruktur wird wesentlich durch die folgenden Parameter eingestellt: Flexibilität der Stützelemente, Beuldruck und Materialeigenschaften. Die Materialeigenschaften werden durch die Verformungsfähigkeit des Materials bestimmt.

Aus geometrischen Gründen entstehen sechseckartigen Beulstrukturen, wenn eine zylindrische Stützwalze mit zickzackförmig umlaufenden Stützelementen verwendet wird. Dagegen werden vorzugsweise fünf- oder seckseckartige Beulstrukturen gebildet, wenn die Stützwalze eine schalenförmige Gestalt hat. Denn es ist bekannt, daß beispielsweise eine Kugeloberfläche aus geometrischen Gründen nicht aus gleichseitigen Sechsecken zusammengesetzt werden kann.

Als flexible Stützelemente werden vorzugsweise Bänder und Ringe aus Elastomeren, Kunststoffen, Metallen sowie Kettenelemente oder Spiralen verwendet, die eine runde oder ovale oder rechteck-, dreieck- oder trapezförmige Querschnittsfläche besitzen. Damit die flexiblen Stützelemente einerseits auf dem Mantel axial beweglich sind, andererseits beabstandet sind, werden wahlweise zwischen den Stützelementen hochelastische Packungen, z.B. aus Elastomeren, Weich-Kunststoffen oder Metallgeweben angebracht. Wahlweise sind die Stützelemente auch in umlaufenden, flachen Mulden des Zylindermantels angeordnet. Auch weitere Möglichkeiten sind gegeben.

In einer weiteren, vorteilhaften Ausgestaltung werden beabstandete, flexible oder steife Ringe bzw. Spiralen, die fest mit dem Mantel verbunden sind, als Stützelemente verwendet. Auch flexible Scheiben, die beabstandet in den Mantel eingefügt sind, können als Stützelemente dienen.

Die Beulverformung mit flexiblen Stützelementen kann zu einer ungleichmäßigen Zickzackverformung führen, so daß auch die Sechseckstrukturen nicht einheitlich werden. Weiterhin werden elastische Stützelemente während der Beulverformung etwas zusammengedrückt.

Sofern das nicht gewünscht ist, werden steife oder nur etwas flexible Stützelemente verwendet, die auf ihrem Umfang eine definierte Zickzackform oder Schlangenform besitzen. Auf diese Weise entstehen beim Beulvorgang definierte, reproduzierbare Seckseckstrukturen. Vorzugsweise werden nach der Erfindung diejenigen Zickzack- und Schlangenformen der Stützelemente gewählt, die sich bei der idealisierten Beulverformung mit den elastischen Stützelementen selbständig einstellen würden.

Die nach einer Weiterbildung der Erfindung erzielten Vorteile bestehen insbesondere darin, daß die Beulverformung dünner Wände nicht mehr auf die Einzelteilherstellung zylindrischer Wände beschränkt bleibt. Da für die Beulverformung der Materialbahn in zeitlicher Folge jeweils nur ein Segment der mit Stützelementen versehenen Stützwalze benötigt wird, werden halbkontinuierliche oder kontinuierliche Beulverfahren zur Herstellung quasi "endloser" Folien oder Bänder realisiert. Hierdurch kann die Umformleistung des Beulverfahrens stark erhöht werden.

Eine quasi "endlose" Herstellung beulprofilierter Bänder wird dadurch erreicht, daß Bleche oder Folien über einer Stützwalze auf dem umlaufende Stützringe oder Stützspiralen angebracht sind, gezogen werden und dann durch den Druck einer äußeren, flexiblen Druckmanschette beulverformt werden. Dieses Verfahren arbeitet schrittweise. Im drucklosen Zustand der Druckmanschette wird das Band weiterbewegt. Im Stillstand des Bandes werden die Beulstrukturen durch den Druck der Druckmanschette hydraulisch aufgeprägt.

Es ist wahlweise weiterhin vorgesehen, daß die Druckmanschette eine beulprofilierte Oberfläche besitzt, die auf mechanischem Wege in das Band eingedrückt wird. Die Druckmanschette besteht vorzugsweise aus einem elastischen Material. Obwohl es sich jetzt bei diesem Vorgang um ein mechanisches, statt hyraulisches Formgebungsverfahren handelt, ist es nicht mit den herkömmlichen Formpreßverfahren gleichzusetzen. Bei den herkömmlichen Formpreßverfahren werden vergleichsweise große Verformungskräfte benötigt, damit der Werkstoff im plastischen Zustand in die Form gepreßt wird; bei dem Verfahren nach der Erfindung nicht. Es handelt sich deshalb beim mechanischen Eindrücken um einen Beulvorgang, der von einer Krümmung des Bandes, Stützringen oder Stützspiralen auf der Innenseite des Bandes sowie einer besonderen beulstrukturierten Oberfläche der Druckmanschette ausgeht. Die beulstrukturierte Oberfläche der Druckmanschette hat vorzugsweise die Oberflächenstruktur, die sich (spiegelbildlich) beim hydraulischen Beulvorgang ergibt. Die beulprofilierte Oberfläche der elastischen Druckmanschette wirkt beim Eindrücken so, als ob viele einzelne hydraulische Druckelemente nach den oben genannten Beulgesetzmäßigkeiten wirksam sind.

Eine weitere vorteilhafte Ausgestaltung sieht ein kontinuierlich arbeitendes, mechanisches Beulverfahren vor. Statt der Druckmaschette mit beulprofilierter Struktur wird ein flexibles umlaufendes Profilband verwendet, welches auf der einen Seite durch eng nebeneinander angeordnete Stützrollen abgestützt wird und auf der anderen Seite versetzte Noppen, bevorzugt aus Hartgummi, besitz. Die versetzten Noppen sind so angeordnet, daß sie den Beulmulden der Beulstruktur des zu verformenden Bandes entsprechen.

Der apparative Aufwand für kontinuierliche Beulverfahren kann noch weiter dadurch verringert werden, daß flexible Druckwalzen oder pneumatische Druckwalzen für die Erzeugung des Beuldruckes verwendet werden. Der Beuldruck wird mittels flexibler Druckwalze oder pneumatischer Druckwalze auf die zu verformende Materialbahn gedrückt. Hierbei dringt die zu verformende Materialbahn, welche um die mit Stützelementen versehener Stützwalze gebogen ist, in die Druckwalze ein. Die flexible Druckwalze besteht aus einem elastischen zylindrischen Druckmantel, bevorzugt aus einem elastomeren Werkstoff. Der Preßdruck läßt sich steuern/regeln. Es kann auch eine flexible oder pneumatische, profilierte, vorzugsweise genoppte Druckwalze verwendet werden, wobei die versetzten Noppen den Beulmulen der Beulstruktur der zu verformenden Materialbahn entsprechen. Hierbei ist es vorteilhaft, wenn von der Druckwalze gleichzeitig jeweils ein Segment mit zwei oder mehr Beulen in Umfangsrichtung in die zu verformende Materialbahn eingedrückt wird.

Ferner können steife Druckwalzen mit versetzten, steifen oder flexiblen Noppen verwendet werden. Diese sind vorteilhaft für die Beulverformungen von dickeren Blechen oder Bändern, die vergleichsweise große Verformungskräfte erfordern. Trotz der in die Materialbahn eindringenden Noppen handelt es sich prinzipiell um eine Beulverformung. Allerdings wird die Oberfläche der zu verformenden Materialbahn durch das Eindringen einer steifen, genoppten Druckwalze stärker beeinträchtigt, als es bei der flexiblen oder pneumatischen Druckwalze der Fall ist. Die erforderlichen Verformungskräfte werden reduziert, wenn die Beulverformung bei erhöhten Temperaturen der zu verformenden Materialbahn durchgeführt wird.

Die Stützwalzen sind mit flexiblen oder steifen Stützelementen anwendbar.

Eine weitere vorteilhafte Ausgestaltung sieht die Anwendung zweier oder mehrerer Druckwalzen vor. Beispielhaft erzeugt die erste Druckwalze mit steifen Noppen in der zu verformenden Materialbahn grobe Beulstrukturen, während die folgende, flexible Druckwalze die gewünschten Beulfalten weiter ausbildet und unerwünschte Unebenheiten in den Beulmulden teilweise ausgleicht. Auch eine umgekehrte Reihenfolge der Druckwalzen kann vorteilhaft sein. Weiterhin können zickzackförmige, schlangenförmige oder sonstige periodisch umlaufende Stützelemente für die Beulverformung verwendet werden. Hierbei treten nur geringe Verformungen der Stützelemente auf, da die Stützelemente den Umlauflinien der mehrdimensionalen, versetzten Beulstruktur jeweils angepaßt sind.

Eine weitere vorteilhafte Ausgestaltung sieht die Herstellung von Rohren, bevorzugte Rohre aus Extrusions- oder Streckanlagen (Kunststoffe) oder aus Walz- oder Ziehanlagen (Metall), vor. Die Einbeulung des Kunststoffes ist dabei nur dann bleibend, wenn sie über die Rückstellfähigkeit des Materials hinausgeht. Im Grundsatz gilt das für alle Materialien.

Es können ein- oder mehrgängige schneckenförmige Stützelemente verwendet werden, die synchron zur Transportgeschwindigkeit des zu verformenden Rohres in axialer Richtung gedreht werden. Zur Aufprägung des Beuldruckes können eine oder mehrere flexible, glatte oder profilierte Druckwalzen verwendet werden, die in Umfangsrichtung des zu verformenden Rohres umlaufen. Die Druckwalzen haben dieselbe prinzipielle Funktion wie bei der oben beschriebenen Beulprofilierung von Materialbahnen, jedoch sind bei der Verwendung von profilierten Druckwalzen die versetzten Noppen den Beulmulden der ein- oder mehrgängigen Schnecke anzupassen. Anpassen heißt dabei nicht notwendige Formidentität mit der gewünschten Beule. Ausreichend ist, daß die Noppen nur andeutungsweise die Konturen der Beulen wiedergeben und eine Art Keimbildung/Initialwirkung bei der Entstehung jeder Beule haben. Dieses Verfahren eignet sich auch für die Beulverformung von endlosen Rohren. Da die beulstrukturierten Rohre einerseits eine erhöhte radiale Steifigkeit und andererseits eine verbesserte Biegefähigkeit gegenüber den glatten (nicht beulstrukturierten) Rohren aufweisen, sind sie als endlose Rohre in einfacher Weise aufwickelbar.

Als Stützelement kann eine Schnecke dienen, deren äußere Durchmesser durch eine mechanische oder pneumatische Vorrichtung variiert werden kann. Auf diese Weise kann die Schnecke nach der jeweiligen Beulverformung mit geringem Kraftaufwand wieder in die Ausgangsposition zurückgedreht werden.

Es ist wahlweise weiterhin vorgesehen, daß Materialbahnen, Folien oder schalenförmige Behälterteile in der Weise beulverformt werden, daß kegelstumpfförmige, beulstrukturierte Halbzeuge oder Bauteile entstehen. Kegelstumpfförmige Bauteile, z.B. Eimer, Transportbehälter oder Trinkbecher, haben den Vorteil, daß sie raumsparend ineinander gestapelt werden können. Kegelstumpfförmige Bauteile sollen aus Festigkeits- und optischen Gründen trotz veränderlichen Durchmessers dieselbe Anzahl von Beulen in Umfangsrichtung haben. Erfindungsgemäß werden deshalb die Parameter: Abstand h der Stützspirale bzw. -ringe und die Wanddicke so gewählt, daß bei gleichem hydraulischen Beuldruck trotz veränderlichem Durchmesser jeweils dieselbe Anzahl von Beulen in Umfangsrichtung entsteht. Alternativ werden vorzugsweise kegelstumpfförmige Druckwalzen für die Beulenverformung verwendet, wobei der örtliche Beuldruck durch eine veränderliche Winkelneigung zwischen der Druckwalze einerseits und dem mit den Stützelementen versehenen Mantel andererseits variabel einstellbar ist. Hierbei sind flexible oder pneumatische glatte oder genoppte Druckwalzen von Vorteil.

Rotationssymetrische Bauteile können auch dadurch beulartig verformt werden, daß elastische oder pneumatische und/oder profilierte Druckwalzen verwendet werden, wobei die örtlichen Beuldrücke vorzugsweise durch die Balligkeit der Druckwalzen so gewählt werden, daß vorzugsweise trotz veränderlichen Durchmessers dieselbe Anzahl Beulen in Umfangsrichtung entstehen.

Die beulprofilierten dünnen Materialbahnen bzw. Folien besitzen eine stark erhöhte Formsteifigkeit gegenüber Scheitellast und punktförmiger Belastung. Ein beulprofilierter Zylinder aus dünnem Alu-Blech ist z.B. um den Faktor ca. 8 steifer als ein Zylinder mit glattem Alu-Blech, woraus sich eine Werkstoff- und Gewichtseinsparung von ca. 50 % ergibt. Hierdurch ergeben sich zahlreiche industrielle Anwendungsmöglichkeiten für material- und gewichtssparende Leichtbaukonstruktionen. Da weiterhin die beulprofilierten Folien trotz mehrfacher Biegungen ihr gleichmäßige Beulstruktur behalten, sind sie auch im Bereich von Verschalungen und Verpackungen geeignet. Beulprofilierte dünne Wände oder Folien sind für die Ummantelung von Wärmedämmstoffen, z.B Glaswolle, geeignet, da sie die Wärmedämmstoffe - ohne zusätzliche Befestigungen und Halterungen - mit den Erhebungen der Beulstrukturen fixieren. Diese Ummantelungen für Wärmedämmungen sind sehr formstabil und somit materialeinsparend und besitzen ein gutes optisches Aussehen. Durch das Beulverfahren wird die Oberflächengüte gegenüber der unverformten glatten Wand nahezu nicht beeinträchtigt, dieses gilt auch für anodisierte, eloxierte, hochreflektierende Oberflächen von dünnen Wänden.

Die beulverformten Materialbahnen haben eine lichttechnische Anwendbarkeit. Eine geometrisch gerichtete Lichtreflexion mit diffusem Licht wird erzielt, wenn konkave Schalen mit konvexen Beulstrukturen verwendet werden. Eine konkave Schale mit konkaven Beulstrukturen erzeugt eine gerichtete, punktuelle Lichtstreuung. Konvexe Schalen mit konvexen Beulstrukturen erzeugen eine nahezu allseitige, diffuse Lichtstreuung.

Eine weitere vorteilhafte Ausgestaltung sieht vor, daß beulstrukturierte Materialbahnen als formstabile Schallreflektoren verwendet werden, deren geometrische Abmessungen im Bereich der zu reflektierenden Schallwellenlängen liegen. Für eine gleichmäßige akustische Schallverteilung in Musiksälen usw. werden bevorzugt konvexe Schalen als Schallreflektoren verwendet. Beulstrukturierende Wände eignen sich wegen ihrer hohen Formsteifigkeit als freitragende, schalltechnische Elemente. Da für eine gute Schallreflektion eine vergleichsweise große Wandmasse benötigt wird, werden dünnwandige beulstrukturierende Schalen bei Bedarf zur Erhöhung der Masse mit einem anderen Material hinterfüttert.

In einer weiteren vorteilhaften Ausgestaltung werden beulprofilierte Wände oder Schalen verwendet, um akustische Nachhalleffekte dadurch zu vermeiden oder zu reduzieren, daß der Schall an der Beulstruktur diffus gestreut wird. Hierbei werden vergleichsweise tiefere Beulen verwendet, wobei die geometrischen Größen der Beulen ca. den Schallwellenlängen der Luft entsprechen. Anwendungsbereiche sind z.B. geräuschstarke Fabrikhallen oder Verkehrshallen, wo der Schall diffus gestreut und dann in Schallabsorberelementen absorbiert wird.

Eine weitere schalltechnische Eigenschaft von z.B. beulprofilierten Rohren oder Hohlzylindern besteht darin, daß infolge der erhöhten Biegesteifigkeit der akustische Grundton erhöht wird, wenn hierbei eine beulverformte Wand mit einer glatten Wand bei sonst gleichen geometrischen Abmessungen verglichen wird.

Andererseits werden in der Technik Rohre, Zylinder oder Hohlkörper benötigt, die im unteren Frequenzbereich nicht zu Schwingungen angeregt werden. Ein Beispiel hierfür sind Schornsteine, die einerseits formstabil sind und andererseits durch den Wind nicht zu großen Schwingungen angeregt werden sollen, um eine Zerstörung zu vermeiden. Bei beulverformten Rohren, Zylindern oder Hohlkörpern wird diese Gefahr vermieden bzw. reduziert, da die unterste anregbare Schwingungsfrequenz gegenüber der glatten Wand erhöht ist. Dadurch wird das unerwünschte Dröhnen reduziert.

Eine andere Ausgestaltung sieht vor, daß beulstrukturierte Materialbahnen für formstabile Mehrkammerbehälter verwendet werden, wobei die inneren Trennwände durch die umlaufenden Beulknicke der Wand fixiert werden. In der Recyclingtechnik werden Mehrkammerbehälter verwendet, um getrennt Glas, Dosen, Papier usw. zu sammeln. Werden Mehrkammerbehälter aus beulstrukturierten Wänden gefertigt, ergeben sich zwei Vorteile. Wegen der großen Formstabilität beulstrukturierter dünner Wände sind die Behälter gewichtsparend. Weiterhin werden die inneren Trennwände - des in der Regel zylindrischen - Mehrkammerbehälters durch die umlaufenden Beulknicke der Wand fixiert.

Eine andere Ausgestaltung ist weiterhin eine Sandwich-Konstruktion aus übereinandergeschichteten beulstrukturierten Wänden oder Schalen, die die Formsteifigkeit weiter erhöht.

Zwecks gleichmäßiger Abstandshaltung der geschichteten beulstrukturierten Wände werden abwechselnd Beulstrukturen mit Rechts- und Linksdrall verwendet, wobei der Drall der Stützspiralen während des Beulvorganges nach Anspruch 1 ein- oder mehrgängig ist.

Beulstrukturierte Materialbahnen, die vorzugsweise eine rauhe Oberfläche besitzen, können für das Aufblasen (Aufspritzen) von Spritzbeton verwendet werden. Zur Herstellung von Schalungen/Armierungen für Betonkonstruktionen werden in der Regel aufwendige Konstruktionen mit Versteifungsmaterialien benötigt, die mit Spritzbeton angespritzt werden. Beulprofilierte Wände und Schalen sind für das Anspritzen mit Spritzbeton besser geeignet, da sie formstabil und arbeitssparend sind. Damit der Spritzbeton auf der beulenprofilierten Wand noch besser haftet, erhält die beulprofilierte Wand eine gut haftende Oberflächenrauhigkeit oder es wird die glatte Wand mit einem Maschen- oder Drahtgitter verbunden.

Verbundkonstruktionen stellen eine weitere Maßnahme dar. Insbesondere wenn die Zwischenräume der Sandwich-Konstruktionen aus beulprofilierten Wänden mit Sekundärstoffen aufgefüllt werden, entstehen formstabile Verbundkonstruktionen.

Die Haftwirkung zwischen der beulstrukturierten Wand und dem Füllstoff kann dadurch verbessert werden, daß eine mit Maschen- oder Drahtgitter verbundene beulstrukturierte Wand verwendet wird. Als Füllstoffe können auch minderwertige Recycling-Kunststoffe verwendet werden. Diese Füllstoffe werden entweder in flüssiger Form in die Zwischenräume der Beulstrukturen eingedrückt oder als Flüssig-Feststoffgemisch, z.B. erwärmtes Kunststoffgemisch, auf die einzelnen beulstrukturierten Wände aufgetragen,

Eine weitere vorteilhafte Ausgestaltung der Erfindung sieht die Einfärbung der Beulknicke oder Beulmulden vor. Für den optischen oder lichttechnischen Bereich der Werbung, Raumgestaltung usw. können die wabenförmigen Beulstrukturen dadurch lichttechnisch hervorgehoben werden, daß beulstrukturierte Wände aus lichtdurchlässigen dünnen Wänden, die auf einer Seite mit einer lichtreflektierenden Schicht belegt sind, hergestellt werden, und dann die lichtreflektierenden Beschichtungen im Bereich der Beulknicke oder Beulmulden entfernt werden, z.B. durch Ätzen. Hierdurch wird die beulprofilierte Wand im Bereich der Beulknicke oder der Beulmulden lichtdurchlässig.
Anwendungsbeispiele im Bereich der Werbung sind Leuchtbuchstaben aus beulprofilierten Rohrstücken, wobei nachts eine Lichtquelle innerhalb der Rohrstücke diffus gestreut wird und durch die lichtdurchlässigen Konturen scheint. Tagsüber reflektieren die Leuchtbuchstaben das Tageslicht auf der Außenseite der beulstrukturierten Wände. Die wabenförmigen Beulstrukturen können durch unterschiedliche Methoden gefärbt werden, z.B. durch Übertragung von in einem Fluidstrom suspendierten Farbpartikeln, wobei die Einfärbung an den hervorstehenden Oberflächenerhebungen (Beulkanten) erhöht ist. Hierdurch ergeben sich sehr feine Farbabstufungen. Dies folgt aus den strömungsphysikalischen Gesetzen des Stoffübergangs. Auch ein Aufdampfen im Vakuum ist möglich. Eine gröbere Einfärbung erfolgt mittels Farbwalzen, die über den Oberflächenerhebungen abgerollt werden. Eine zeitlich variable Färbung kann durch Verwendung einer Thermo-Farbe, die bei Über- bzw. Unterschreiten einer bestimmten Temperatur einen Farbumschlag erhält, erreicht werden. Eine unterschiedliche Temperaturverteilung entlang der Beulstruktur ergibt sich, wenn z.B. die beulstrukturierte Wand mit elektrischem Strom (Joulesche Wärme) durchflossen oder mit einem warmen oder kalten Medium umströmt wird. Hierbei wirkt sich der Wärmeübergang an der Beulstruktur auf die Temperaturverteilung aus.

Eine weitere Anwendung der Erfindung erfolgt bei der Herstellung von Flaschen, Trinkgefäßen usw. Dort wird häufig das Extrusionsverfahren, beispielsweise bei Kunststoffen, oder das Blasverfahren, beispielsweise bei Glas, angewendet, wobei der Werkstoff im plastischen Zustand durch Innendruck an eine äußere Formwand gepreßt wird. Damit sehr dünnwandige Flaschen, Trinkgefäße usw. zwecks Gewichts- und Materialeinsparung eine formstabile Wand erhalten, werden gerne profilierte Formwände verwendet. Nach dem unter dem Namen Hydroform bekannten hydraulischen Verfahren werden metallische Hohlkörper, z.B. Rohre, durch vergleichsweise große Innendrücke gegen eine äußere Form gepreßt und dabei plastisch verformt. Weiterhin werden bei dem mechanischen Formpressen z.B. Bleche durch Pressung zwischen zwei Formteilen verformt.

Die Herstellung der für die genannten Verfahren benötigten Formen ist aufwendig und teuer. Eine vorteilhafte Herstellung von profilierten Formwänden wird durch Verwendung beulprofilierter Wände erreicht, wobei die folgenden Methoden angewendet werden können:
1. Beulprofilerte Wände werden auf ihrer Außenseite mit formsteifen Materialien hinterfüttert - z.B. durch Ausgießen mit Metallen, die einen niedrigeren Schmelzpunkt haben als der Werkstoff der beulprofilierten Wand. Für eine gute Härtung der hinterfutterten Materialien ist, wie bereits erläutert, eine Oberflächenrauhigkeit vorteilhaft.
2. In ähnlicher Weise, wie die beulstrukturierte Wand mit Spritzbeton angespritzt wird, kann die beulstrukturierte Formwand mit einem flüssigen Material, beispielsweise Metall, angespritzt werden, welches auf der beulstrukturierten Wand erstarrt. Hierbei wird die Erstarrungswärme, d.h. die negative Schmelzwärme durch Kühlung der Formwand abgeführt.

Weitere vorteilhafte Maßnahmen sind in den übrigen Unteransprüchen beschrieben.

Die Erfindung ist anhand verschiedener Ausführungsbeispiele in der beiliegenden Zeichnung dargestellt und wird nachfolgend näher beschrieben; es zeigt:
- Figur 1: eine schematische Darstellung einer Vorrichtung, die zur Ausführung der Erfindung eingesetzt werden kann
- Figur 2: die Draufsicht auf eine mit einer Vorrichtung nach der Figur 1 hergestellten Beulstruktur
- Figur 3: die Aufsicht auf eine mit einer Vorrichtung nach Figur 1 hergestellten, abgewickelten Beulstruktur von einer mehrgängigen Stützspirale;
- Figur 4: die Aufsicht auf eine mit einer Vorrichtung nach der Figur 1 hergestellten, abgewickelten Beulstruktur unter Verwendung von Stützringen;
- Figur 5, 6, 7, 8, 9: den schematischen Querschnitt durch unterschiedliche Arten der flexiblen Stützelemente auf einem Zylindermantel,
- Figur 10: den schematischen Querschnitt durch eine Vorrichtung mit elastischen Packungen für die Beabstandung von flexiblen Stützelementen;
- Figur 11: den schematischen Querschnitt durch eine Vorrichtung mit Mulden im Mantel für die Beabstandung von flexiblen Stützelementen;
- Figur 12: die Aufsicht auf eine Beulstruktur, mit steifen Stützelementen ausgestatteten Vorrichtung hergestellt;
- Figur 13: die Aufsicht auf eine Beulstruktur, mit flexiblen Stützelementen ausgestatteten Vorrichtung,
- Figur 14: den schematischen Querschnitt durch eine Vorrichtung mit auf dem Mantel fest beabstandeten, flexiblen Stützringen;
- Figur 15: den schematischen Querschnitt durch eine Vorrichtung mit auf dem Mantel fest beabstandeten, flexiblen Stützscheiben;
- Figur 16: die Aufsicht auf eine Vorrichtung mit auf dem Mantel fest beabstandeten, zickzackförmigen Stützelementen;
- Figur 17: die Aufsicht auf eine Vorrichtung mit auf dem Mantel fest beabstandeten, schlangenförmigen Stützelementen;
- Figur 18: zeigt schematisch in einer Aufsicht die Noppen und die Struktur eines beulprofilierten Bandes;
- Figur 19: zeigt schematisch den Aufbau einer Vorrichtung zur Herstellung von beulstrukturierten Materialbahnen durch das kontinuierliche Beulverfahren;
- Figur 20: zeigt schematisch den Aufbau einer Vorrichtung zur Herstellung von beulstrukturierten Materialbahnen mit einer flexiblen Druckwalze und mit einem mit Stützelementen besetzten Mantel;
- Figur 21: zeigt schematisch den Aufbau einer Vorrichtung zur Herstellung von beulprofilierten Rohren mit zwei äußeren Druckwalzen und mit einer inneren Schützschnecke;
- Figur 22: zeigt schematisch den Aufbau einer Vorrichtung zur Herstellung kegelstumpfförmiger, beulstrukturierter Bauteile mit zwei kegelstumpfförmigen Walzen;
- Figur 23, 24, 25, 26: zeigt die schematische Darstellung unterschiedlicher Arten der Schalen- und Beulstrukturen zur Lichtreflektion.
- Figur 27: einen schematischen Querschnitt durch einen Mehrkammerbehälter;
- Figur 28: einen schematischen Querschnitt durcheine Heiz- bzw. Kühlplatte;
- Figur 29: die schematische Ansicht eines doppelwandigen Zylinders aus beulstrukturierten, mit einer Vorrichtung nach Figur 1 hergestellten Materialbahnen;
- Figur 30: zeigt den prinzipiellen Aufbau einer Form mit einer beulprofilierten Oberfläche für die Herstellung von Gefäßen nach dem Extrusionsblasverfahren im Querschnitt.

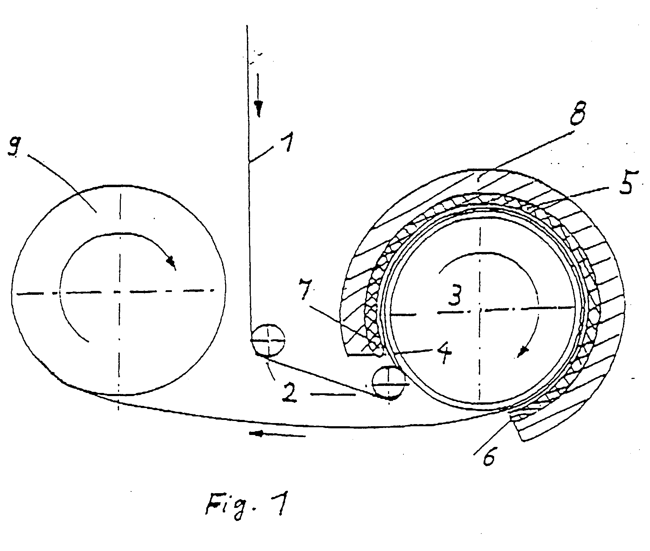

Die Figur 1 zeigt einführend schematisch das halbkontinuierliche Beulverfahren. Das Band 1 wird über die Leitrollen 2, über die Stützwalze 3, auf der eine umlaufende Spirale 4 angebracht ist, gezogen. Mittels einer flexiblen Druckmanschette 5, welche durch eine äußere Haltevorrichtung 8 abgestützt wird, wird hydraulisch ein Überdruck auf das Band 1 übertragen, wodurch der Beulvorgang stattfindet. Die Beulverformung erfolgt dadurch, daß der Überdruck auf das zu verformende, dünne Band 1 aufgeprägt wird. Es entstehen örtliche Einbeulungen des dünnen Bandes 1 jeweils zwischen den beabstandeten Stützelementen der Stützspirale 3. An einer örtlichen Beule bilden sich Beulränder einerseits an der umlaufenden Linie der Stützspirale 3 und andererseits in den Zwischenräumen der Stützspirale 3. Diese Beulränder bzw. Beulknicke erzeugen eine dreidimensionale Formsteifigkeit der örtlichen Beule. Deshalb bleibt diese örtliche Beule formstabil, und es bildet sich die nächste örtliche Beule. Dieser Verformungsvorgang läuft schnell ab. Besonderes Merkmal ist, daß sich die Beulen entlang der Spiralreihen selbständig versetzt einstellen. Hierdurch erhält die beulstrukturierte, dünne Wand eine hohe Formstabilät.

Anschließend wird die Druckmanschette druckentlastet und das Band durch Drehung der Stützwalze 3 so weit weiterbewegt, daß nur noch ein kleiner Teil des bereits beulverformten Bandes unter der Druckmanschette 5 liegt. Von diesem beulverformten Teil geht die weitere Beulverformung des Bandes aus. Bei Bedarf erhält die Druckmanschette 5 unterschiedliche Druckbereiche, damit der Druck vom Ende 6 in Richtung Anfang 7 der Druckmanschette aufgebaut wird. Diese kann durch separate Druckabschnitte in der Druckmanschette erfolgen. Alternativ wird die Druckleitung an der Stelle 5 der Druckmanschette angeschlossen, so daß sich der Druck, ggf. über zusätzliche Strömungswiderstände in der Druckmanschette von hinten 6 nach vorne 7 aufbaut. Diese Maßnahmen dient dazu, daß bei dem halbkontinuierlichen Beulverfahren ein gleichmäßiges Beulprofil entlang des Bandes 1 entsteht. Das beulprofilierte Band wird auf die Rolle 9 aufgewickelt.

Wird eine Kunststoffolie verformt, wird die Druckapparaur auf die Temperatur des elastisch-plastischen Übergangsbereiches des Kunststoffes aufgeheizt. Werden noch höhere Temperaturen für einen elastisch/plastischen Beulvorgang (tiefe Beulen für Metalle, dünne für Glaswände) benötigt, wird die Druckmanschette durch temperaturbeständige Dichtpackungen ersetzt.

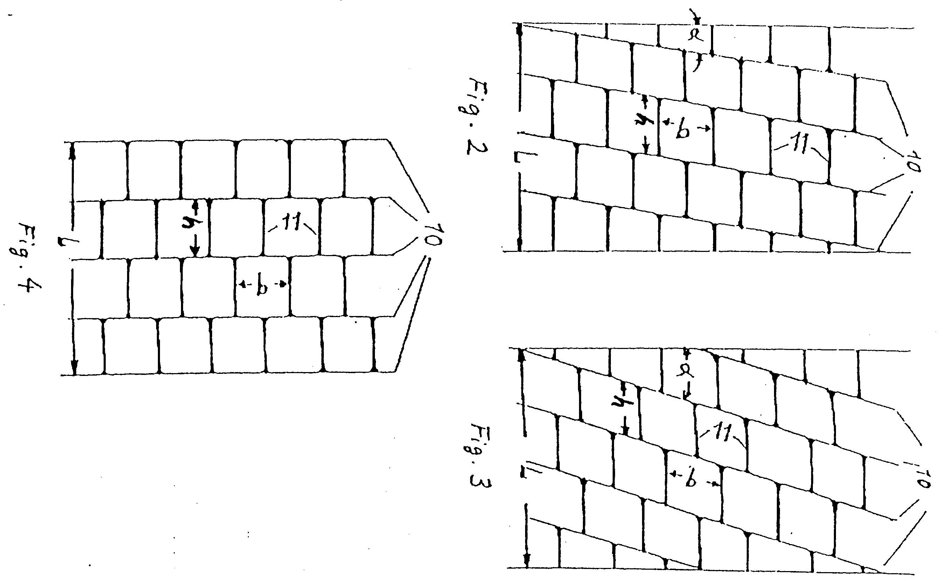

Die in Figur 2 dargestellte Vorrichtung zeigt die Beulstruktur in der Aufsicht eines abgewickelten Folienabschnittes. Der Abstand h der Beulstrukturen entspricht dem Abstand h der Stützspirale 4 in Figur 1, wenn die Stützspirale eingängig ist. Die umlaufenden Beulknicke entsprechen den Auflagelinien der Stützspirale. Die axialen Beulknicke 11 und somit die Breite b stellen sich durch den Beulvorgang in Figur 1 selbständig ein. Die Anzahl der Beulstrukturen läßt sich nach einer empirischen Formel vorausberechnen. In Figur 3 ist die abgewickelte Beulstruktur von einer mehrgängien Stützspirale dargestellt. Hierdurch wird der Neigungswinkel in Figur 3 größer als der Neigungswinkel alpha in Figur 2.

In Figur 4 ist die Beulstruktur einer abgewickelten Folie dargestellt, welche mit einer Apparatur analog Figur 1 dargestellt wurde, wobei äquidistante Stützringe statt der Stützspirale 4 verwendet wurden. Der Neigungswinkel wird hierbei Null.

Die in Figur 5, 6, 7, 8 und 9 dargestellten Vorrichtungen zeigen schematisch die Querschnitte von unterschiedlichen Arten der flexiblen Stützelemente. Es zeigen:
- Figur 5: kreisrunde Stützelemente 14

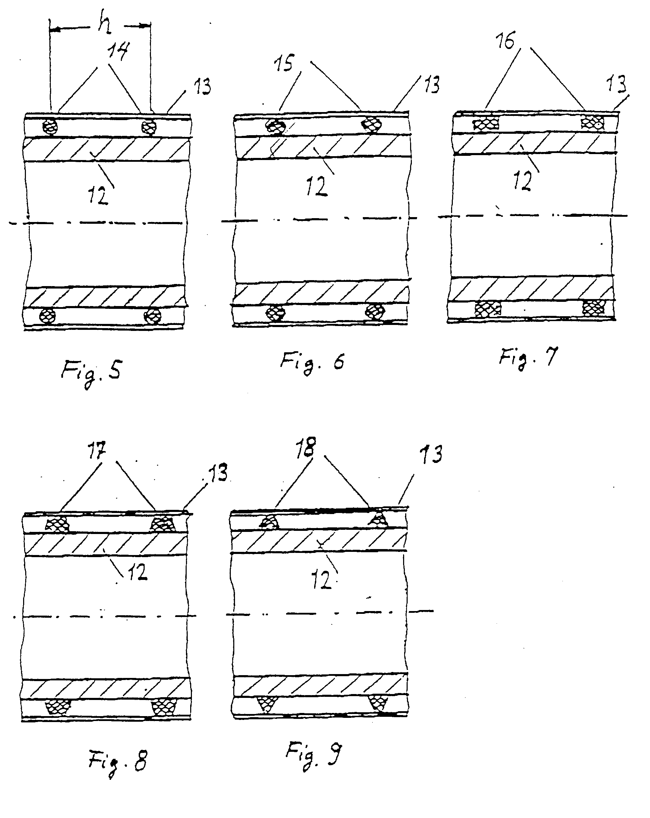

- Figur 6: ovale Stützelemente 15
- Figur 7: rechteckige Stützelemente 16

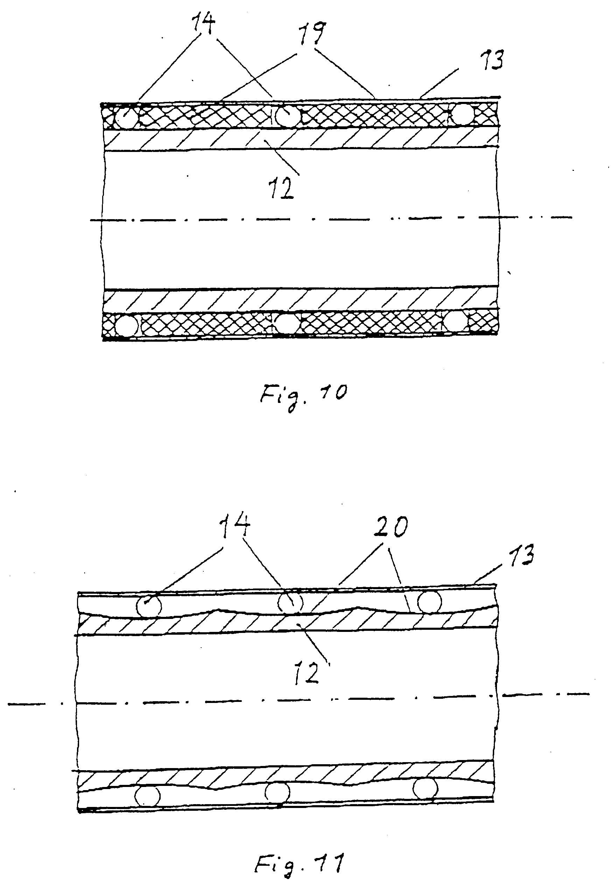

- Figur 8: trapezförmige Stützelemente 17
- Figur 9: dreieckförmige Stützelemente 18

In den Figuren 5, 6, 7, 8 und 9 ist in allen Ausführungen nach Figur 5 bis 9 jeweils eine Stützwalze 12 dargestellt. Mit 13 ist jeweils das zu bearbeitende/beulende Material bezeichnet. Das Material wird in allen Ausführungsformen durch die vorstehend beschriebenen flexiblen Stützelemente auf Abstand von der Stützwalze 12 gehalten. Die Stützelemente sind hier als Ringe ausgebildet. Sie können auch spiralförmig verlaufen, pneumatisch oder hydraulisch aufspannbar sein, oder als Ketten ausgebildet sein.

Bei einer Beaufschlagung von außen mit Druck, die unten noch erläutert wird, bilden sich im Material 13 Beulen. Die Form und Anordnung der Beulen wird unten erläutert.

Zusätzliche Abstandsvorrichtungen gewährleisten die Beabstandung der flexiblen Stützelemente. Der in der Figur 10 dargestellte Querschnitt der Vorrichtung zeigt elastische Packungen 19 zur Beabstandung der Stützelemente 14 auf der Stützwalze 12.

Der in der Figur 11 dargestellte Querschnitt der Vorrichtung zeigt flache, umlaufende Mulden 20, die gleichfalls der Beabstandung der Stützelemente 14 förderlich sind.

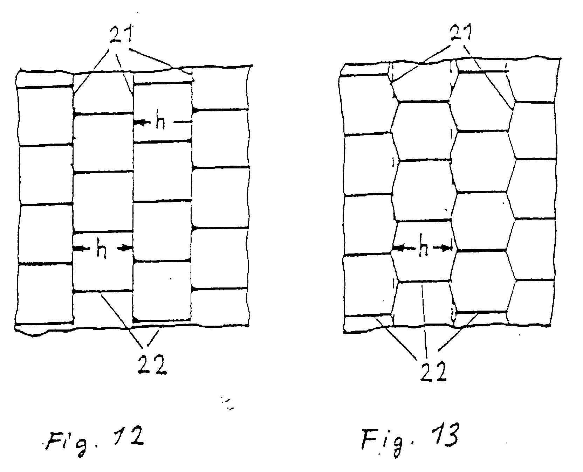

Figur 12 zeigt die Aufsicht der Beulstruktur einer abgewickelten, metallischen Materialbahn, die nach dem oben beschriebenen älteren Verfahren mit steifen Stützringen beulartig verformt wurde. Es entstehen quadratische oder rechteckförmige Beulstrukturen, wobei die geraden Beulknicke 21 die Linien der steifen Stützringe abbilden. Die Längen der axialen Beulknicke 22 entsprechen dem Abstand h der Stützringe 14 in Figur 5.

Bei der Verwendung von flexiblen Stützelementen entstehen vorzugsweise sechseckförmige Beulstrukturen, wobei die Beulen zu den benachbarten Beulen versetzt sind. Figur 13 zeigt die Aufsicht einer abgewickelten Materialbahn, die in einer Vorrichtung mit flexiblen Stützelementen beulverformt wurde. Die Länge der axialen Beulknicke 22 ist gegenüber dem Abstand h der Stützelemente (vor der Beulverformung) etwas reduziert. Die Beulknicke 21 nehmen eine zickzackförmigen Verlauf an.

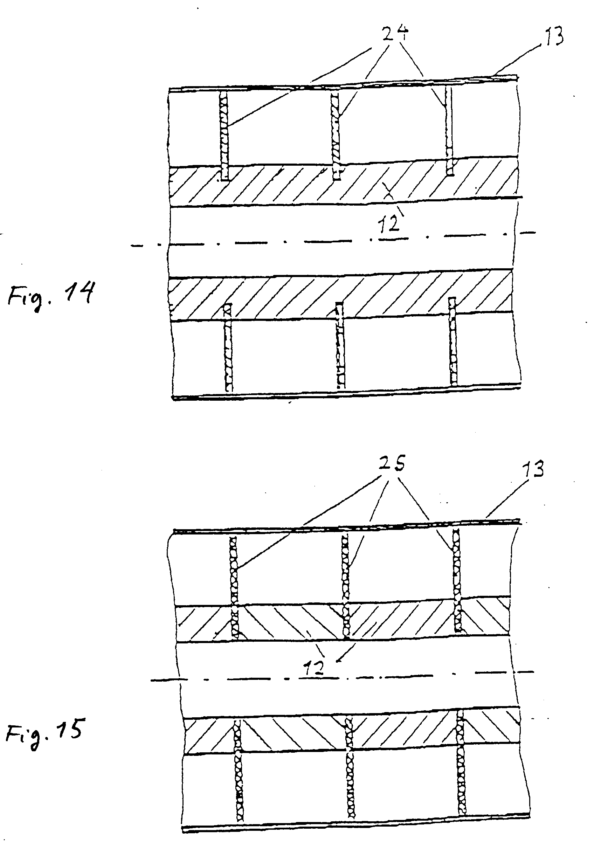

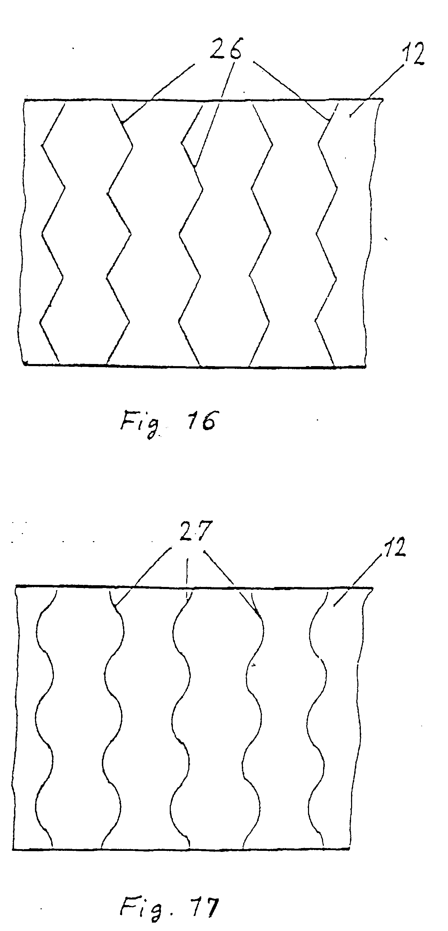

Die in Figur 14 dargestellte Vorrichtung zeigt den Querschnitt einer Stützwalze 12 mit auf der Stützwalze fest verbundenen, aber flexiblen Stützringen 24. Die flexiblen Stützringe 24 werden auf ihrem Umfang durch die Beulverformung der Materialbahn 13 axial verformt und nehmen in Umfangsrichtung eine zickzackförmige Linie an. In analoger Weise dienen die in Figur 15 in der Stützwalze 12 beabstandet angeordneten, flexiblen Scheiben 25 als Stützelemente. Je nach Nachgiebigkeit bzw. Festigkeit werden die Stützringe 24 bzw. die Scheiben 25 mehr oder weniger axial verformt.

Die in Figur 16 dargestellte Aufsicht auf eine Vorrichtung zeigt in einer abgewickelten, ebenen Darstellung die zickzackförmigen Stützelemente 26, die fest auf der Stützwalze 12 fixiert sind. Diese Stützelemente 26 werden beispielsweise aus metallischen Rund- oder Rechteckprofilen zickzackförmig gebogen und dann auf dem Mantel 12 befestigt.

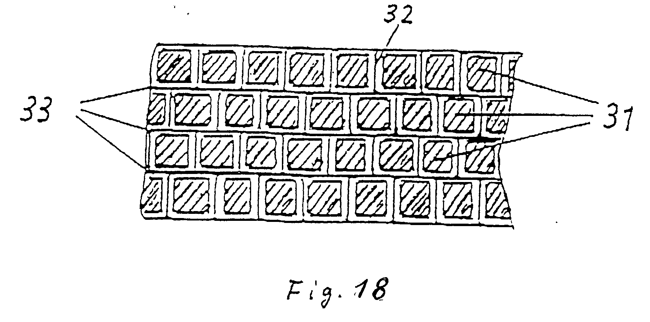

Die in Figur 17 dargestellte Aufsicht auf eine Vorrichtung zeigt in einer abgewickelten ebenen Darstellung die schlangenförmigen Stützelemente 27, die fest auf dem Mantel 12 fixiert sind. Das schlangenförmige Biegen der Stützelemente 27 ist technisch besonders einfach zu realisieren.

Die zickzackförmigen oder schlangenförmigen Stützelemente 26 und 27 können auch direkt in die Stützwalze 12 eingefräst werden.

Ein erfindungswesentliches Merkmal ist, daß die Druckmanschette 5 in Figur 1 eine beulprofilierte Oberfläche besitzt, die den Abständen der Stützringe 4 entspricht. Die Oberfläche der Druckmanschette muß nicht unbedingt die vollständige Beulform enthalten. Es ist ausreichend, daß die Oberfläche der profilierten Druckmanschette aus versetzten Noppen 31, z.B. aus Hartgummi, besteht, die in ihrer Form den Beulmulden entsprechen. Figur 18 zeigt schematisch in einer Aufsicht die Noppen 31 und die Struktur des beulprofilierten Bandes 32. Die Beulfalten 33 entsprechen den Linien der Stützringe 4 in Figur 1.

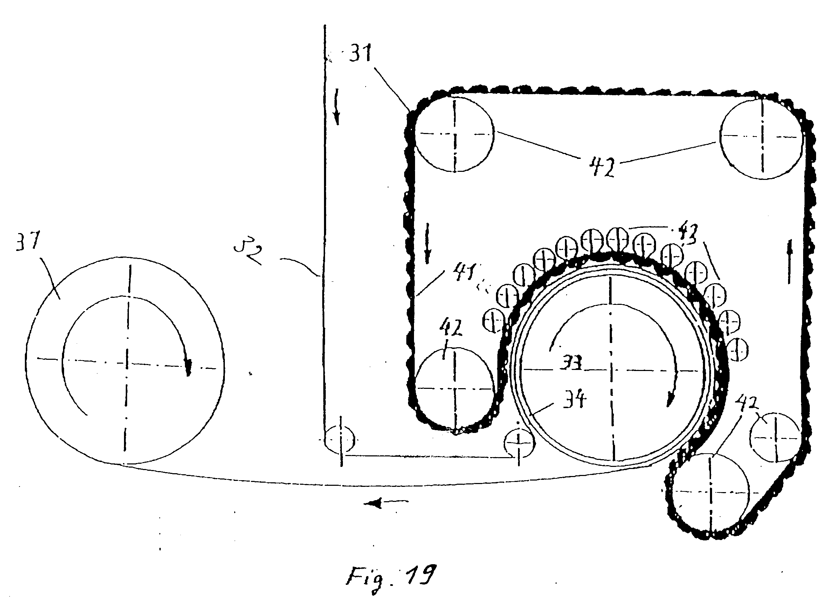

Die Figur 19 zeigt schematisch das kontinuierliche Beulverfahren. Das Band 32 wird kontinuierlich über die Führungsrollen über die Stützwalze 33, auf dem die Stützringe 34 angebracht sind, geführt. Das umlaufende profilierte Band 41 wird über fünf Leitrollen 42 geführt und über die Stützwalze 33, incl. Band 31, geleitet. Mittels Stützrollen 43 wird das umlaufende profilierte Band 41, welches vorzugsweise aus faserverstärkten Material besteht, auf das Band 32 gedrückt, wodurch die Beulverformung entsteht. Der Verformungsdruck ist durch die Stützrollen 43 einstellbar. Das beulverformte Band wird auf die Rolle 37 aufgewickelt.

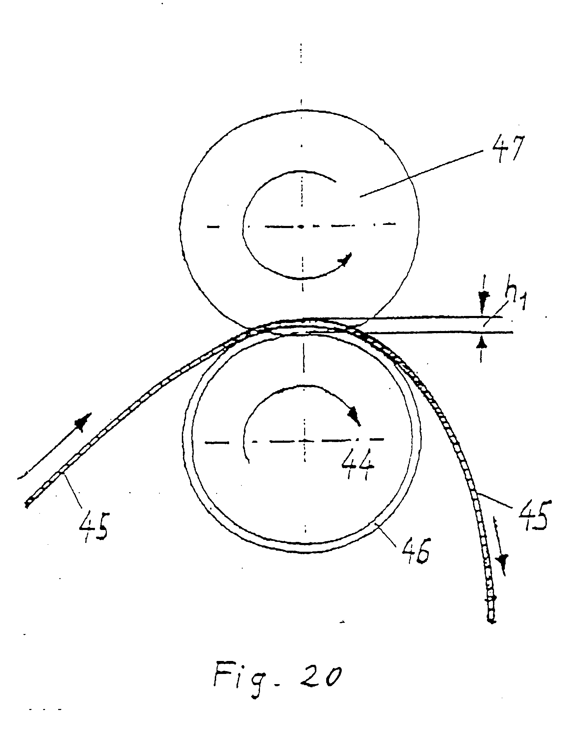

Die Figur 20 zeigt schematisch den Ablauf einer Vorrichtung mit mechanischer Vermittlung des Beuldruckes. Die Vorrichtung ist zur kontinuierlichen Herstellung von beulstrukturierten Materialbahnen geeignet.

Über die Stütwalze 44 mit Stützelementen 46 wird die Materialbahn 45 gebogen und transportiert. Eine flexible, glatte Druckwalze 47 überträgt den für die Beulverformung erforderlichen Druck auf die Materialbahn. Die Elastizität der Druckwalze 47 und deren Durchmesser sind im Ausführungsbeispiel so gewählt, daß im Eingriffsbereich der Druckwalze 47 durch den für die Beulverformung der Materialbahn erforderliche Druck ein Segment von ca. zwei Beulen in Umfangsrichtung der Materialbahn beulverformt wird. Die Segmentbetrachtung dient nur der Erläuterung des Eingriffsbereiches. Im Betrieb erzeugen die Stützwalze 44, die Stützelemente 46 und die Druckwalze 47 eine fortlaufende Reihe von Beulen. Die Druckwalze 47 besteht im Ausführungsbeispiel aus Gummi. Wahlweise kann der Eingriffsbereich auch etwas weniger als zwei Beulen oder mehr umfassen.

In einem weiteren, nicht dargestellten Ausführungsbeispiel besitzt die flexible Druckwalze aus Gummi oder aus einem anderen Elastomer eine beulprofilierte oder genoppte, versetzte Oberfläche, die den Abständen der Stützelemente 46 entspricht. Die Noppen sind entweder aus einem flexiblen oder steifen Material. Die Noppen haben eine Form, die im Ausführungsbeispiel kleiner als die Form der vorgesehenen Beulen ist. Die Noppen verursachen eine Initialwirkung bei der Entstehung der Beulen. Trotz der kleineren Form der Noppen werden die entstandenen Beulen aufgrund der Verformung der Gummiwalze und aufgrund des Druckes im Eingriffsbereich im Ausführungsbeispiel von dem Gummi der Druckwalze voll ausgefüllt.

In einem weiteren, nicht dargestellten Ausführungsbeispiel ist eine steife Druckwalze mit einer beulprofilierten Oberfläche oder mit einer genoppten, versetzten Oberfläche vorgesehen. Auf diese Weise können auch dickwandige Materialbahnen beulverformt werden. Die Noppen sind aber so profiliert, daß zwar ein Einbeulen, aber keine für ein Tiefziehen charakterischte Materialverformung entsteht.

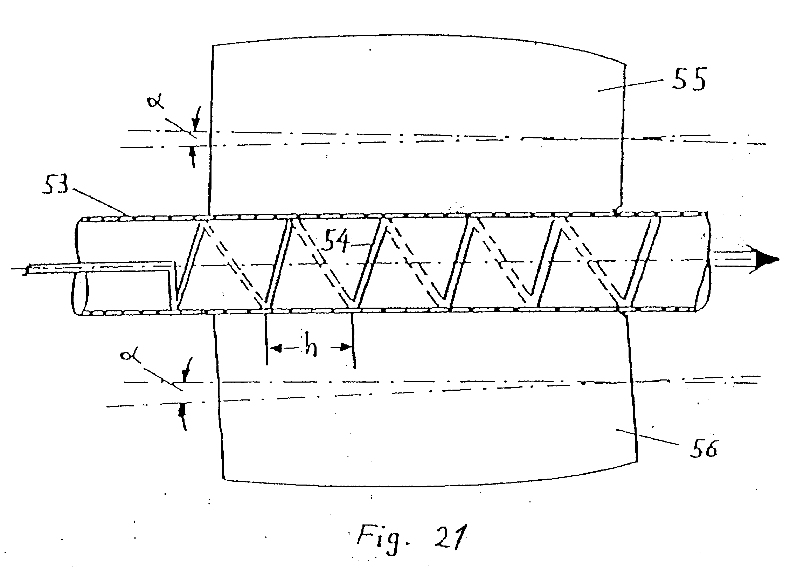

Die in der Figur 21 dargestellte Vorrichtung zeigt den schematischen Aufbau einer Vorrichtung zur Herstellung beulstrukturierter Rohre, auch von großer Länge. Das zu verformende Rohr 53 wird axial transportiert und auf seiner Innenseite durch eine Schnecke 54 gestützt. Die Schnecke 54 besitzt eine Gangweite h und stellt die beabstandeten Stützelemente dar. Zwei rotierende Druckwalzen 55 und 56 nach Art der Druckwalze 47 werden in Höhe der Schnecke 54 in Umfangsrichtung um das zu verformende Rohr 53 geführt und drücken das Beulprofil in das Rohr ein. Durch die synchronen Drehungen der Schnecke 54 einerseits und der Druckwalze 55 und 56 andererseits wird das beulverformte Rohr in axialer Richtung transportiert.
Die Druckwalzen 55 und 56 bestehen wie die Druckwalze 47 aus einem flexiblen, glatten Material, hier Gummi. Die Elastizität der Druckwalzen 55 und 56 ist wiederum so gewählt, daß durch den Druck auf das Rohr ein Walzenelement gedrückt wird, das in Umfangsrichtung des Rohres ca. zwei Beulen entspricht. Vorzugsweise sind die Druckwalzen 55 und 56 ballig geformt und etwas axial mit dem Winkel gegenüber dem zu verformenden Rohr angeordnet. Hierdurch erzeugen die Druckwalzen 55 und 56 ein Druckgefälle entgegen der Transportrichtung des Rohres. Auf diese Weise entsteht eine kontinuierliche Beulstruktur in axialer Richtung des Rohres.

Die beiden Druckwalzen können - wahlweise auch zusammen mit weiteren Druckwalzen nach der Erfindung auch genutzt werden, um eine schrittweise Einbeulung zu erreichen. Z.B. kann von zwei Druckwalzen die eine mit Noppen versehen sein und die Aufgabe haben, die Beulung zu initiieren, und die andere ohne Noppen die Aufgabe haben, die Beulung zu vollenden.

Alles kann nach der Erfindung auch mit einer mehrgängigen Schnecke kombiniert werden.

Im Ausführungsbeispiel nach Figur 21 werden die Druckwalzen angetrieben. Die Druckwalzen laufen um das Rohr. Statt dessen oder auch gemeinsam mit den Druckwalzen kann das Rohr angetrieben werden.

In einem weiteren Ausführungsbeispiel nach Figur 21 wird das zu verformende Rohr 53 in axialer Richtung gedreht und fortbewegt. Die synchron rotierenden Druckwalzen 55 und 56 sind ortsfest angeordnet. Die Schnecke 54 ist ebenfalls ortsfest angeordnet. Dieses Verfahren eignet sich vorzugsweise zur diskontinuierlichen Beulverformung von einzelnen Rohren.

Um die Reibungskräfte zwischen der inneren Rohrwand und der Schnecke 54 während des Zurückdrehens zu verringern, wird der Durchmesser der Schnecke 54 etwas reduziert, vorzugsweise durch eine mechanische Verwindung der Schnecke 54. Alternativ kann eine pneumatische Schnecke verwendet werden.

Die Schnecke kann auch durch ein aufgewickeltes Band gebildet werden.

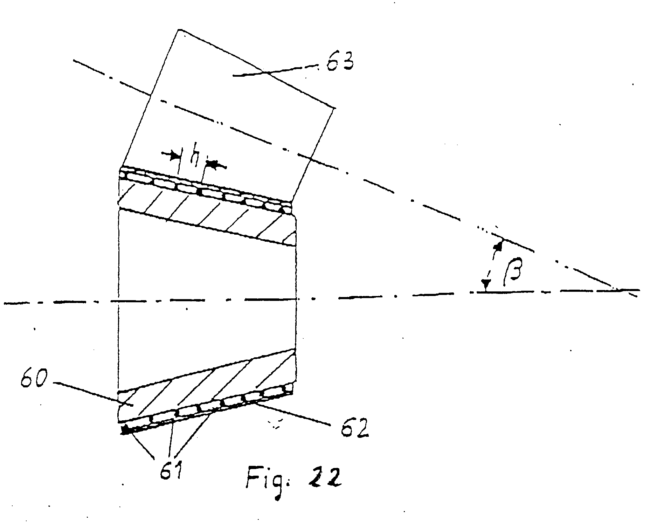

Die in der Figur 22 dargestellte Vorrichtung zeigt den schematischen Aufbau einer Vorrichtung zur Herstellung kegelstumpfförmiger, beulstrukturierter Bauteile. Auf der kegelstumpfförmigen Stützwalze 60 sind die Stützringe 61 in der Weise beabstandet angeordnet, daß die Abstände h zwischen den Stützringen 61 mit zunehmendem Durchmesser des Kgelstumpfes größer werden. Diese sind vorgesehen, damit bei konstanter Wandstärke des zu verformenden kegelstumpfförmigen Materials 62 trotz veränderlichen Durchmessers des Kugelstumpfes eine konstante Anzahl der Beulen je Umfang gebildet wird. Zugleich ist der Beuldruck im Bereich der größeren Kegelstumpfdurchmesser niederiger als im Bereich der kleineren Kegelstumpfdurchmesser. Deshalb wird nach der Erfindung zwecks variabler Beuldruckeinstellung die kegelstumpfförmige, elastische Druckwalze 63 gegenüber der kegelstumpfförmigen Stützwalze 60 mit einem variablen Winkel geneigt und angedrückt.

Wie die andere Druckwalze 47 kann die Druckwalze 63 auch eine beulprofilierte oder mit versetzten Noppen versehene Oberfläche besitzen. Da durch das Oberflächenprofil der Druckwalze 63 die Beulstrukturen vorgezeichnet werden, müssen die Abstände h der Stützringe nicht so exakt eingehalten werden, wie im Fall der elastischen, glatten Druckwalze ohne Noppen.

Die Wanddicke des kegelstumpfförmigen Bauteils 62 ist mit steigendem Kegelstumpfdurchmesser in der Weise größer gewählt, daß die Beulvorrichtung bei einem einheitlichen Druck stattfinden kann.

Auch können zylindrische und kegelstumpfförmige und schalenförmige, beulstrukturerende Bauteile zusammengefügt werden. In Sonderfällen werden zylindrische und kegelstumpfförmige und schalenförmige, dünnwandige (incl. der Stützelemente) miteinander verbunden und dann gleichzeitig durch inneren Unterdruck und/oder äußeren Überdruck beulverformt. Auf diese Weise können komplizierte, mehrdimensinale Bauteile mit hoher Formsteifigkeit bei geringem Raumgewicht hergestellt werden.

Bei Sandwichkonstruktionen bewirkt die beulstrukturierende Oberfläche zusätzlich eine verbesserte Haftung der Sekundärstoffe.

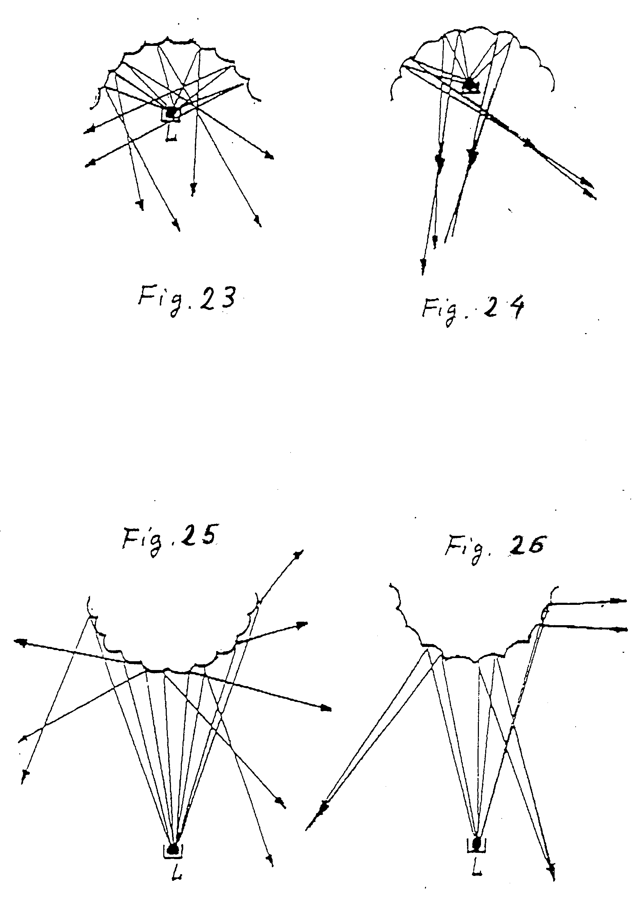

Die in den Figuren 23 bis 26 dargestellten Vorrichtungen zeigen schematisch die verschiedenen Arten der Schalen- und Beulstrukturen zur Lichtreflexion (L = Lichtquelle):

Eine konkave Schale mit konvexen Beulstrukturen erzeugt eine geometrisch gerichtete Lichtreflexion mit diffuser Lichtstreuung.

Eine konkave Schale mit konkaven Beulstrukturen erzeugt eine nahezu allseitige diffuse Lichtstreuung.

Eine konvex Schale mit konkaven Beulstrukturen erzeugt eine nahezu allseitige, punktuelle Lichtstreuung.

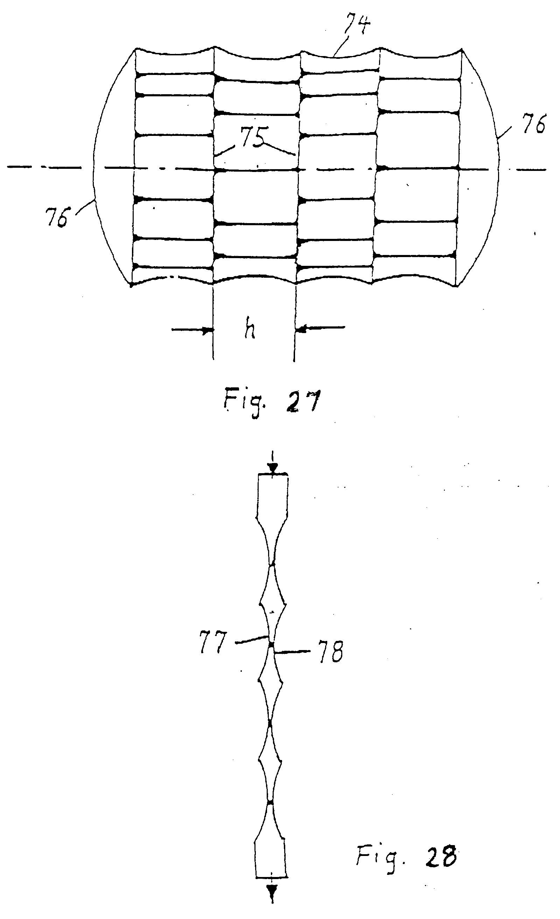

Die in der Figur 27 dargestellte Vorrichtung zeigt schematisch einen zylindrischen Mehrkammerbehälter. Die beulprofilierte zylinderische Wand 74 besitzt einen jeweiligen Abstand h der umlaufenden Beulknicke 75 (10 in Figur 4), wobei h dem Abstand der Trennwände zueinander entspricht.

Durch die umlaufenden Beulknicke 75 der Wand werden die Trennwände örtlich fixiert, die bei Bedarf noch verklebt werden.

Die Kugelkalotten 76 schließen den Mehrkammerbehälter seitlich ab. Hierdurch entstehen formstabile, gewichtsparende Mehrkammbehälter, die z.B. im Fall von Müllcontainern noch Einfüllschlitze und verschließbare Entleerungsöffnungen besitzen, die in der Figur 27 nicht dargestellt sind.

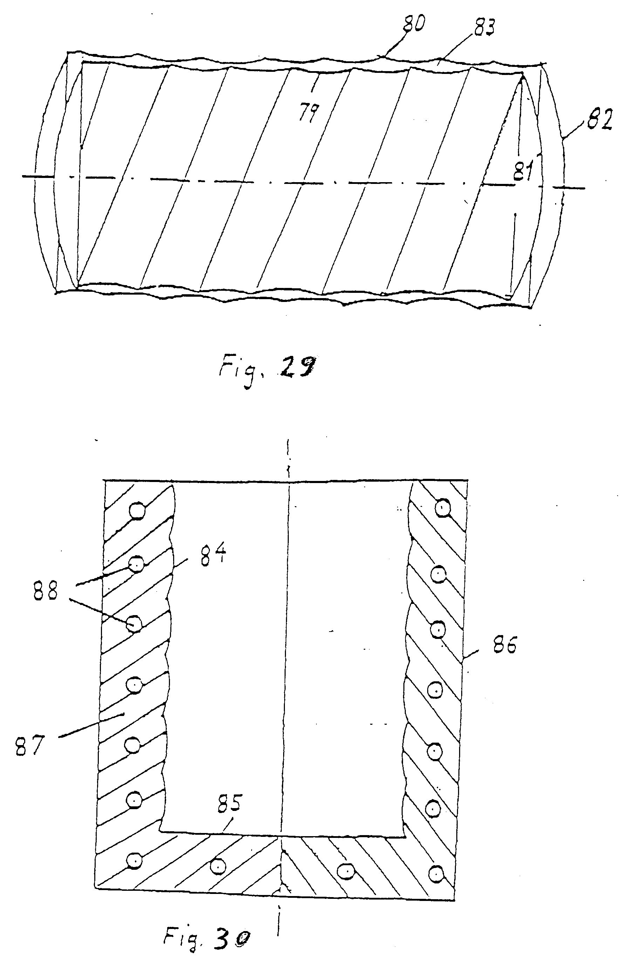

Die in der Figur 28 dargestellte Vorrichtung zeigt eine Heiz- bzw. Kühlplatte schematisch. Zwei beulprofilierte Platten 77 und 78 werden beulseitig gegeneinander gelegt und verklebt bzw. verlötet. Im Zwischenraum strömt das Heiz- oder das Kühlmedum.

Die in der Figur 29 dargestellte Vorrichtung zeigt einen doppelwandigen zylindrischen Behälter, z.B. für die Lagerung von flüssigen Gefahrstoffen. Hierbei besteht der Innemantel 79 aus einem beulprofilierten Zylinder, auf welchen der äußere beulprofilierte Zylinder 88 gewickelt bzw. übergestülpt wird. Zwecks gegenseitiger Abstützung der Beulwände von 79 und 80 werden die Beulstrukturen vorzugsweise mit unterschiedlichem Drall und unterschiedlichen Neigungswinkel (Figur 2, 3 und 4) verwendet. Die Kugelkalotten 81 und 82 sind mit den Beulzylindern 79 und 80 verklebt oder verschweißt. Der Ringraum 83 dient zur Aufnahme einer Testflüssigkeit bzw. eines Heiz- oder Kühlmediums. Einfüll-, Entleerungs- und Kontrollöffnungen sind in der schematischen Zeichnung von Figur 29 nicht dargestellt.

Die in der Figur 30 dargestellte Vorrichtung zeigt den prinzipiellen Aufbau einer Form mit einer beulprofilierten Oberfläche für die Herstellung von Gefäßen nach dem Extrusionsverfahren. Eine beulprofilierte zylindrische Wand 84 mit einem Boden 85 wird in einem zylindrischen Behälter 86 mit niedrigsiedendem, flüssigen Material 87 im Ringraum, der die Kühlschlange 88 enthält, hintergossen. Für eine bessere Haftung der erstarrenden Metallschmelze auf der beulprofilierten Wand besitzt die beulprofilierte Wand auf der Außenseite eine Oberflächenrauhigkeit. Die Kühlschlange 88 dient zur Kühlung der Form während des thermischen Blasverfahrens.

## Patentansprüche

1. Verfahren zur Beulversteifung einer dünnen Materialbahn (1,69,64,62,53,45,32,13), bei dem die Materialbahn (1,69,64,62,53,45,32,13) dazu in gekrümmter Form auf dem Umfang von Stützelementen (4, 14,15,16,17,18,24,26,27,28,29,34, 46,54,71) und mittels dieser Stützelemente beabstandet abgestützt und ein Beuldruck aufgebracht wird, so daß sich die Beulen frei einstellen können, wobei die Stützelemente (4,14,15,16,17,18,24,26,27,28,29,34,46,54,65,71) drehbeweglich angeordnet sind, dadurch gekennzeichnet, daß die Materialbahn (1,69,64,62,53,45,32,13) in Umfangsrichtung der Stützelemente zugeführt und über die Stützelemente (4,14,15,16,17,18,24,26,27,28,29,34,46,54,65,71) gebogen wird oder als Rohr oder als Kegelstumpf auf die Stützelemente aufgelegt und in der Krümmung segmentweise mit Druck beaufschlagt wird.

2. Verfahren nach Anspruch 1, dadurch gekennzeichnet, daß 4- bis 6eckige Beulen (10, 11, 21, 22, 33, 75) erzeugt werden.

3. Verfahren nach Anspruch 1 oder 2, dadurch gekennzeichnet , daß der Beuldruck mit einem flüssigen oder gasförmigen Druckmittel aufgebracht wird.

4. Verfahren nach Anspruch 3, dadurch gekennzeichnet, daß der Beuldruck als Überdruck oder Unterdruck oder gleichzeitig an einer Materialbahnseite als Überdruck und an der anderen Materialbahnseite als Unterdruck erzeugt wird.

5. Verfahren nach Anspruch 1 oder 2, dadurch gekennzeichnet, daß der Beuldruck mechanisch aufgebracht wird.

6. Verfahren nach Anspruch 3 oder 4, gekennzeichnet durch die Verwendung von flexiblen Hüllen (5) für die Druckmittelbeaufschlagung.

7. Verfahren nach einem oder mehreren der Ansprüche 1 bis 6, dadurch gekennzeichnet, daß die gebeulte Materialbahn zu einer konvexen oder konkaven Form gebogen wird.

8. Verfahren nach einem oder mehreren der Ansprüche 1 bis 7, dadurch gekennzeichnet, daß für die Beulen der gebeulten Materialbahnen geometrische Abmessungen gewählt werden, die im Bereich einer zu reflektierenden Schallwellenlängen liegen.

9. Verfahren nach Anspruch 8, dadurch gekennzeichnet, daß die Materialbahn zur diffusen Schallstreuung gelocht oder geschlitzt wird oder mit Maschengitter versehen wird.

10. Verfahren nach Anspruch 8 oder 9, dadurch gekennzeichnet, daß die Tiefe der Beulstruktur in Abhängigkeit von der erforderlichen diffusen Schallstreuung eingestellt wird.

11. Verfahren nach Anspruch 1, dadurch gekennzeichnet, daß die Materialbahn nach dem Beulen mit einer weiteren gebeulten Materialbahn übereinander geschichtet und zu einer Sandwich-Konstruktion verbunden wird.

12. Verfahren nach Anspruch 1, dadurch gekennzeichnet, daß als Stützelemente mehrgängige Spiralen verwendet werden.

13. Verfahren nach Anspruch 12, dadurch gekennzeichnet, daß die Spiralen abwechselnden Rechts- und Linksdrall aufweisen.

14. Verfahren nach Anspruch 1, dadurch gekennzeichnet, daß die Materialbahn eine rauhe Oberfläche aufweist.

15. Verfahren nach Anspruch 14, dadurch gekennzeichnet, daß die Materialbahn vor der Beulverformung mit einer Gitterauflage versehen wird.

16. Verfahren nach Anspruch 1, dadurch gekennzeichnet, daß die Materialbahn nach dem Beulverfahren mit einer weiteren gebeulten Materialbahn übereinander geschichtet wird und Sekundärstoffe zwischen die Materialbahnen eingelagert werden.

17. Verfahren nach Anspruch 16, dadurch gekennzeichnet, daß die Sekundärstoffe Recycling-Kunststoffe sind.

18. Verfahren nach Anspruch 1, dadurch gekennzeichnet, daß die Bereiche der Beulknicke (10, 11, 21, 22, 23, 75) oder Beulmulden gefärbt werden.

19. Verfahren nach Anspruch 18, gekennzeichnet durch eine Verfärbung durch strömungsphysikalischen Farbstoffübergang oder Aufdampfen oder durch Farbwalzen oder mittels Thermofarbe.

20. Verfahren nach Anspruch 1 gekennzeichnet durch eine Steuerung der Beulenabmessungen mittels Erwärmung der Materialbahn.

21. Verfahren nach Anspruch 20, gekennzeichnet durch eine Erwärmung über das Druckmittel.

22. Verfahren nach Anspruch 20, gekennzeichnet durch eine Erwärmung mittels Strombeaufschlagung der Materialbahn.

23. Verfahren nach Anspruch 1, dadurch gekennzeichnet, daß die beulstrukturierte Materialbahn auf einer Seite mit formsteifem Material (87) hintergossen oder hinterblasen wird.

24. Verfahren nach Anspruch 5, dadurch gekennzeichnet, daß in einem schrittweisen Beulverfahren die Materialbahn (1) über eine Stützwalze (3), auf der umlaufende Stützringe oder Stützspiralen (4) angebracht sind, gezogen wird und mittels äußerer, glatter, flexibler Druckmanschetten (5) beulverformt wird.

25. Verfahren nach Anspruch 5, dadurch gekennzeichnet, daß in einem schrittweisen Beulverfahren die Materialbahn über eine Stützwalze (3), auf der umlaufende Stützringe oder Stützspiralen (4) angebracht sind, gezogen wird und mittels einer äußeren, flexiblen Druckmanschette, die eine profilierte Oberfläche besitzt, beulverformt wird.

26. Verfahren nach Anspruch 5, dadurch gekennzeichnet, daß in einem kontinuierlichen , mechanischen Beulverfahren, die Materialbahn über eine Stützwalze (33), auf der umlaufende Stützringe (34) oder Stützspiralen angebracht sind, gezogen wird und mittels umlaufendem, flexiblen Band (41) verformt wird, das die Struktur selbst organisierter Beulung enthält.

27. Verfahren nach einem oder mehreren der Ansprüche 1 bis 26, dadurch gekennzeichnet, daß mehrdimensionale, versetzte Beulstrukturen erzeugt werden.

28. Verfahren nach einem oder mehreren der Ansprüche 1 bis 27, dadurch gekennzeichnet, daß flexible Ringe (14, 15, 16, 17, 18, 24, 25, 28, 29) oder eine flexible Spirale oder Schnecke als Stützelement verwendet wird.

29. Verfahren nach Anspruch 28, dadurch gekennzeichnet, daß die Stützelemente (14, 15, 16, 17, 18, 24, 25, 28, 29) eine runde oder ovale oder rechteckige oder trapezförmige oder dreieckige Querschnittsfläche aufweisen.

30. Verfahren nach einem oder mehreren der Ansprüche 1 bis 29, dadurch gekennzeichnet, daß Ketten oder pneumatische Ringe als Stützelemente verwendet werden.

31. Verfahren nach einem oder mehreren der Ansprüche 28 bis 30, dadurch gekennzeichnet, daß zwecks Beabstandung der Stützelemente elastische Packungen (19) verwendet werden.

32. Verfahren nach Anspruch 31, dadurch gekennzeichnet, daß die Packungen (19) aus Elastomeren, Weichkunststoff oder Metallgeweben bestehen.

33. Verfahren nach einem oder mehreren der Ansprüche (24 bis 32), dadurch gekennzeichnet, daß Stützelemente (4, 14, 15, 16, 17, 18, 24, 26, 27, 28, 29, 34, 46, 54,) verwendet werden, die in axialer Richtung beweglich oder fest angeordnet sind.

34. Verfahren nach Anspruch 33, dadurch gekennzeichnet, daß Stützelemente (24) verwendet werden, die in einer Stützwalze (12) eingefügt sind.

35. Verfahren nach einem oder mehreren der Ansprüche 1 bis 34, dadurch gekennzeichnet, daß ring- oder scheibenförmige Stützelemente (24) verwendet werden.

36. Verfahren nach einem oder mehreren der Ansprüche 1 bis 35, dadurch gekennzeichnet, daß die Beulverformung im Bereich der Druckbeaufschlagung etwas weniger oder mehr als zwei Beulen in Umfangsrichtung umfaßt.

37. Verfahren nach einem oder mehreren der Ansprüche 1 bis 23 und 27 bis 36, dadurch gekennzeichnet, daß eine Druckwalze (47, 55, 56) mit einer profilierten Oberfläche für die Beulverformung verwendet wird.

38. Verfahren nach einem oder mehreren der Ansprüche 5, und 37, dadurch gekennzeichnet, daß mindestens zwei Druckwalzen für die Beulverformung verwendet werden, wobei die erste Druckwalze mit versetzten Noppen eine grobe Beulstruktur einprägt und eine folgende, flexible Druckwalze die Beulfalten vertieft.

39. Verfahren nach Anspruch 28, dadurch gekennzeichnet, daß der äußere Durchmesser der Schnecke durch eine mechanische oder pneumatische Vorrichtung variiert wird.

40. Verfahren nach Anspruch 38, dadurch gekennzeichnet, daß von zwei Druckwalzen eine mit Noppen zur Initiierung der Beulen versehen ist.

41. Verfahren nach einem oder mehreren der Ansprüche 1 bis 4, dadurch gekennzeichnet, daß ein Band (41), welches über die Materialbahn gespannt wird, für die Druckerzeugung der Beulverformung verwendet wird.

42. Verfahren nach einem oder mehreren der Ansprüche 1 bis 22, 27 bis 36, 38 bis 41, dadurch gekennzeichnet, daß eine flexible Druckwalze (47, 55, 56) für die Druckerzeugung verwendet wird.

43. Verfahren nach Anspruch 42, dadurch gekennzeichnet, daß eine Druckwalze (47) aus einem elastomeren Werkstoff verwendet wird.

44. Verfahren nach einem oder mehren der Ansprüche 1 bis 44, dadurch gekennzeichnet, daß eine pneumatische Druckwalze (55, 56) für die Druckerzeugung der Beulverformung verwendet wird.

45. Verfahren nach einem oder mehreren der Ansprüche 1 bis 44, dadurch gekennzeichnet, daß die beulverformte Materialbahn mit einer weiteren beulverformten Materialbahn und/oder mit einer glatten Materialbahn verbunden wird.

46. Verfahren nach einem oder mehreren der Ansprüche 37 bis 45, gekennzeichnet durch eine schlangenförmige oder zickzackförmige profilierte Walze.

47. Verfahren nach Anspruch 1, dadurch gekennzeichnet, daß die Rohre (53) mit zwei umlaufenden Druckwalzen beulverformt werden.

48. Verfahren nach Anspruch 1, dadurch gekennzeichnet, daß kegelstumpfförmige oder ähnliche, dünne Materialbahnen mit Stützelementen beulverformt werden, die als beabstandete, flexible oder steife Ringe (61) oder Spiralen ausgebildet sind, wobei die Stützelementabstände sowie die Dicken der zu verformenden dünnen Wände so gewählt werden, daß bei gleichem hydraulischem Beuldruck dieselbe Anzahl von versetzten Beulen je Umfang des Kegelstumpfes bzw. des Bauteiles entsteht.

49. Verfahren nach Anspruch 48, gekennzeichnet durch die Herstellung rotationssymmetrischer Bauteile.

50. Verfahren nach Anspruch 48 oder 49, gekennzeichnet durch die Beulverformung mit flexiblen oder profilierten Druckwalzen mit angepaßter Winkelstellung und/oder Balligkeit.

51. Verfahren nach Anspruch 1, dadurch gekennzeichnet, daß die beulverformte Materialbahn mit einer weiteren Materialbahn zu einem Verbund-Material verbunden wird.

52. Verfahren nach Anspruch 51, dadurch gekennzeichnet, daß die weitere Materialbahn auf einer Seite des beulverformten Material (84) hintergossen oder hinterblasen wird.

53. Verfahren nach Anspruch 51, gekennzeichnet durch die Herstellung mehrlagigen Verbundmaterials.

54. Verfahren nach Anspruch 1, dadurch gekennzeichnet, daß die beulverformte Materialbahn im Abstand von einer weiteren Materialbahn angeordnet wird.

55. Verfahren nach Anspruch 1, dadurch gekennzeichnet, daß die beulverformte Materialbahn mit anderen Materialbahnen zu einem Behälter verbunden wird.

56. Verfahren nach Anspruch 1, dadurch gekennzeichnet, daß die beulverformte Materialbahn an Wand und Deckenflächen von Gebäuden oder Klangkörpern befestigt wird.

## Claims

1. Process and apparatus for stiffening of thin material sheets (1, 69, 64, 62, 53, 45, 32, 13) by means of dent-profiling, in which the material sheets (1, 69, 64, 62, 53, 45, 32, 13) are supported at regular spaces on the periphery of curved supporting elements (4, 14, 15, 16, 17, 18, 24, 26, 27, 28, 29, 34, 46, 54, 71), with the supporting elements (4, 14, 15, 16, 17, 18, 24, 26, 27, 28, 29, 34, 46, 54, 65, 71) arranged rotatable, and then pressurized so that dents freely form by themselves, characterized by the fact that the material sheet (1, 69, 64, 62, 53, 45, 32, 13) is fed in the peripheral direction of the supporting elements and bent over the supporting elements (4, 14, 15, 16, 17, 18, 24, 26, 27, 28, 29, 34, 46, 54, 65, 71), or, in the case of tubes or truncated cones, laid on the supporting elements and pressurized segment-wise in the curvature.

2. Process according to the first claim characterized by the fact that quadrangular to hexagonal dents (10, 11, 21, 22, 33, 75) are produced.

3. Process according to the first claim and claim #2 characterized by the fact that the indenting pressure is applied by means of a liquid or gaseous medium.

4. Process according to claim #3 characterized by the fact that the indenting pressure is applied as excess or negative pressure, or simultaneously as excess pressure on one side of the material sheet and as negative pressure on the other side.

5. Process according to the first claim and claim #2 characterized by the fact that the indenting pressure is applied mechanically.

6. Process according to claim #3 or #4 characterized by the fact that the pressure is applied via flexible envelopes (5).

7. Process according to one or several of the claims #1-6 characterized by the fact that the dent-profiled material sheet is bent into convex or concave shape.

8. Process according to one or several of the claims #1-7 characterized by the fact that the dimensions of the dents in the dent-profiled material sheet are designed thus that they lie within the range of a sound wave length to be reflected.

9. Process according to claim #8 characterized by the fact that the material sheet is equipped with holes or slots or a mesh grid in order to diffuse sound.

10. Process according to claim #8 or #9 characterized by the fact that the depth of the dents is adjusted with regard to the diffuse sound dispersion required.

11. Process according to the first claim characterized by the fact that the dent-profiled material sheet is superimposed on another dent-profiled material sheet to obtain a sandwich structure.

12. Process according to the first claim characterized by the use of multiple-thread helixes as supporting elements.

13. Process according to claim #12 characterized by the fact that the helixes are alternately left-hand and right-hand twisted.

14. Process according to the first claim characterized by the fact that the material sheet has a rough surface.

15. Process according to claim #14 characterized by the fact that the material sheet is equipped with a grid layer prior to dent-profiling.

16. Process according to the first claim characterized by the fact that the dent-profiled material sheet is superimposed on another dent-profiled material sheet and secondary materials are installed between the material sheets.

17. Process according to claim #16 characterized by the fact that the secondary materials are recycled plastics.

18. Process according to the first claim characterized by coloring either the dent ridges (10, 11, 21, 22, 23, 75) or the dent troughs.

19. Process according to claim #18 characterized by coloring by means of fluidic transfer of color, vacuum evaporation, color distributing rollers, or thermal transfer of color.

20. Process according to the first claim characterized by control of dent dimensions by means of heating the material sheet.

21. Process according to claim #20 characterized by heating via the pressurizing medium.

22. Process according to claim #20 characterized by heating the material sheet via electric current.

23. Process according to the first claim characterized by the fact that one side of the dent-profiled material sheet is backed up with dimensionally stable material (87).

24. Process according to claim #5 characterized by the fact that the material sheet (1) is fed over a support roll (3) around which support rings or helixes (4) are arranged, and then dent-profiled by means of smooth, flexible, external pressure collars (5) in a step-by-step dent-profiling process.

25. Process according to claim #5 characterized by the fact that the material sheet is fed over a support roll (3) around which support rings or helixes (4) are arranged, and dent-profiled by means of an external flexible pressure collar with profiled surface in a step-by-step dent-profiling process.

26. Process according to claim #5 characterized by the fact that the material sheet is fed over a support roll (33) around which support rings (34) or helixes are arranged, and dent-profiled by means of a circulating flexible belt (41) which has the same structure as the self-organizing indentation.

27. Process according to one or several of the claims #1-26 characterized by the fact that multi-dimensional, offset dent structures are produced.

28. Process according to one or several of the claims #1-27 characterized by the use of flexible rings (14, 15, 16, 17, 18, 24, 25, 28, 29) or flexible helixes or screws as supporting elements.

29. Process according to claim #28 characterized by the use of supporting elements (14, 15, 16, 17, 18, 24, 25, 28, 29) that have round, oval, rectangular, trapezoidal, or triangular cross-sections.

30. Process according to one or several of the claims #1-29 characterized by the use of chains or pneumatic rings as supporting elements.

31. Process according to one or several of the claims #28-30 characterized by the use of elastic packings (19) to space the supporting elements.

32. Process according to claim #31 characterized by the use of elastomers, soft plastics, or metallic tissue for the packings (19).

33. Process according to one or several of the claims #24-32 characterized by the use of supporting elements (4, 14, 15, 16, 17, 18, 24, 26, 27, 28, 29, 34, 46, 54) that are arranged movable or fixed with regard to axial direction.

34. Process according to claim #33 characterized by the use supporting elements (24) that are inserted in a support roll (12).

35. Process according to one or several of the claims #1-34 characterized by the use of ring-shaped or disc-shaped supporting elements (24).

36. Process according to one or several of the claims #1-35 characterized by the fact that the area of the dent-profiling pressurization comprises a little less or more than two dents in peripheral direction.

37. Process according to one or several of the claims #1-23 and #27-36 characterized by the use of a press roller (47, 55, 56) with profiled surface for dent-profiling.

38. Process according to one or several of the claims #5 and 37 characterized by the fact that at least two press rollers are used for dent-profiling, with the first press roller equipped with offset knobs indenting a rough dent structure and the second, flexible press roller deepening the dents.

39. Process according to claim #28 characterized by the fact that the outside diameter of the screw is made variable by means of a mechanical or pneumatic device.

40. Process according claim #38 characterized by the fact that one of two press rollers is equipped with knobs that initiate the dents.

41. Process according to one or several of the claims #1-4 characterized by application of the dent-profiling pressure by means of a belt (41) stretched across the material sheet.

42. Process according to one or several of the claims #1-22, 27, 36, and 38 characterized by application of the dent-profiling pressure by means of a flexible press roller (47, 55, 56).

43. Process according to claim #42 characterized by the use a press roll (47) made of elastomer.

44. Process according to one or several of the claims #1-44 characterized by application of the dent-profiling pressure by means of a pneumatic press roller (55, 56).

45. Process according to one or several of the claims #1-44 characterized by the fact that the dent-profiled material sheet is sandwiched with another dent-profiled and/or a smooth material sheet.

46. Process according to one or several of the claims #37-45 characterized by the use of a roller with wave or zigzag profile.

47. Process according to the first claim characterized by the fact that the tubes (53) are dent-profiled by means of two orbiting press rollers.

48. Process according to the first claim characterized by the fact that truncated-cone shaped or similar thin material sheets are dent-profiled by means of supporting elements in the form of spaced flexible or rigid rings (61) or helixes, with the supporting element intervals and the thickness of the thin walls to be profiled chosen thus that at equal hydraulic pressure the same number of offset dents per perimeter of the truncated cone or component results.

49. Process according to claim #48 characterized by the manufacture of rotationally symmetrical components.

50. Process according to claim #48 or #49 characterized by dent-profiling by means of flexible or profiled press rollers with matched angle and/or crowning.

51. Process according to the first claim characterized by the fact that the dent-profiled material sheet is combined with a second material sheet to form a composite material.

52. Process according to claim #51 characterized by the fact that the second dent-profiled material sheet (84) is backed up on one side.

53. Process according to claim #51 characterized by the manufacture of multilayer composite material.

54. Process according to the first claim characterized by the fact that the dent-profiled material sheet is arranged at a distance from another material sheet.

55. Process according to the first claim characterized by the fact that the dent-profiled material sheet is combined with other material sheets to form a container.

56. Process according to the first claim characterized by the fact that the dent-profiled material sheets are installed at walls and ceilings of buildings and acoustic bodies.

## Revendications

1. Procédé visant à renforcer la rigidité de l'embossage d'une mince bande de matière (1,69,64,62,53,45,32,13); dans ce procédé, la bande de matière (1,69,64,62,53,45,32,13), repose sur une surface bombée constituée par des supports (4,14,15,16,17,18,24,26,27,28,29,34,46,54,71) espacés les uns des autres, une pression d'embossage est exercée, laquelle permet la formation libre de reliefs, avec des supports (4, 14, 15, 16, 17, 18, 24, 26, 27, 28, 29, 34, 46, 54, 65, 71) mobiles. Ce procédé se caractérise également par le fait que l'on peut introduire, soit, une bande de matière (1, 69, 64, 62, 53, 45, 32, 13) dans l'axe tangentiel aux supports, ce qui la contraint à se plier, soit, un matériau de forme cylindrique ou tronconique qui vient se placer sur les supports, sur la surface bombée, où le matériau est pressurisé segment par segment.

2. Procédé basé sur le principe de la revendication 1, caractérisé par le fait que les reliefs (10, 11, 21, 22, 23, 33, 75) sont quadrangulaires ou hexagonaux.

3. Procédé basé sur le principe de la revendication 1 ou 2, caractérisé par le fait que la pression d'embossage s'exerce à l'aide d'un fluide ou d'un gaz.

4. Procédé basé sur le principe de la revendication 3, caractérisé par le fait que la pression d'embossage s'exerce en surpression ou en dépression, ou encore agit simultanément en surpression sur un côté de la bande de matière et en dépression sur l'autre côté.

5. Procédé basé sur le principe de la revendication 1 ou 2, caractérisé par le fait que la pression d'embossage s'exerce mécaniquement.

6. Procédé basé sur le principe de la revendication 3 ou 4, caractérisé par l'utilisation de membranes souples (5) pour la pressurisation.

7. Procédé basé sur le principe d'une ou de plusieurs revendications comprises entre 1 et 7, caractérisé par le fait qu'une forme concave ou convexe peut être donnée à la bande de matière embossée.

8. Procédé basé sur le principe d'une ou de plusieurs revendications comprises entre 1 et 8, caractérisé par le fait que, pour les reliefs de la bande de matière, on choisit des dimensions géométriques situées dans le champs de la longueur d'onde sonore à réfléchir.

9. Procédé basé sur le principe de la revendication 8, caractérisé par le fait que la bande de matière sera perforée, entaillée ou munie d'un grillage afin d'assurer une propagation diffuse des ondes sonores.

10. Procédé basé sur le principe de la revendication 8 ou 9, caractérisé par le fait que la profondeur des reliefs est établie en fonction de la diffusion sonore requise.

11. Procédé basé sur le principe de la revendication 1, caractérisé par le fait qu'après avoir été embossée, la bande de matière est déposée sur une autre bande de matière embossée à laquelle elle est assemblée pour former une construction sandwich.

12. Procédé basé sur le principe de la revendication 1, caractérisé par le fait que des cylindres spiralés à pas multiples sont utilisés comme support.

13. Procédé basé sur le principe de la revendication 12, caractérisé par le fait que les cylindres spiralés ont, successivement, un pas à droite, un pas à gauche.

14. Procédé basé sur le principe de la revendication 1, caractérisé par le fait que la bande de matière n'a pas une surface lisse.

15. Procédé basé sur le principe de la revendication 14, caractérisé par le fait qu'une pièce grillagée est posée sur la bande de matière avant l'opération d'embossage.

16. Procédé basé sur le principe de la revendication 1, caractérisé par le fait qu'après le processus d'embossage, la bande de matière est posée sur une autre bande de matière embossée et que de la matière première de récupération est déposée entre les deux bandes.

17. Procédé basé sur le principe de la revendication 16, caractérisé par le fait que la matière première de récupération est du plastique recyclé.

18. Procédé basé sur le principe de la revendication 1, caractérisé par le fait que les surfaces en creux (10, 11, 21, 22, 23, 75) ou en relief de la bande de matière sont peintes.

19. Procédé basé sur le principe de la revendication 18, caractérisé par une coloration par diffusion de la matière colorante selon les lois physiques de l'écoulement ou par vaporisation ou par peinture au cylindre ou encore à l'aide de thermocouleurs.

20. Procédé basé sur le principe de la revendication 1, caractérisé par la possibilité de déterminer la taille des reliefs par le biais du réchauffement de la bande de matière.

21. Procédé basé sur le principe de la revendication 20, caractérisé par un réchauffement par le biais du matériau de pression.

22. Procédé basé sur le principe de la revendication 20, caractérisé par un réchauffement par passage d'un courant électrique dans la bande de matière.

23. Procédé basé sur le principe de la revendication 1, caractérisé par le fait que la bande de matière à structure embossée est doublée sur un côté, en coulant ou en soufflant un matériau indéformable (87).

24. Procédé basé sur le principe de la revendication 5, caractérisé par le fait que selon un processus d'embossage progressif, la bande de matière (1) avance sur un cylindre d'appui (3), sur lequel sont placés les supports annulaires et spiralés (4) mobiles, puis est embossée sous la pression d'un anneau extérieur souple et à surface lisse (5).

25. Procédé basé sur le principe de la revendication 5, caractérisé par le fait que selon un processus d'embossage progressif, la bande de matière avance sur un cylindre d'appui (3), sur lequel sont placés les supports annulaires et spiralés mobiles (4), puis est embossée sous la pression d'un anneau extérieur, souple et à surface profilée.

26. Procédé basé sur le principe de la revendication 5, caractérisé par le fait que, selon un processus d'embossage mécanique et continu, la bande de matière avance sur un cylindre d'appui (33), sur lequel sont placés les supports annulaires et spiralés mobiles (34), est embossée sous l'action d'un ruban souple et mobile (41), donnant naissance à des structures d'embossage irrégulières.

27. Procédé basé sur le principe d'une ou de plusieurs revendications comprises entre 1 et 26, caractérisé par le fait que les reliefs n'ont pas tous la même taille et sont décalés les uns par rapport aux autres.

28. Procédé basé sur le principe d'une ou de plusieurs revendications comprises entre 1 et 27, caractérisé par le fait que des anneaux souples (14, 15, 16, 17, 18, 24, 25, 28, 29) ou un cylindre spiralé souple ou une vis sans fin sont utilisés comme éléments de soutien.

29. Procédé basé sur le principe de la revendication 28, caractérisé par le fait que les éléments de soutien (14, 15, 16, 17, 18, 24, 25, 28, 29) ont une forme à section circulaire, ovale, carrée, triangulaire ou trapézoïdale.

30. Procédé basé sur le principe d'une ou de plusieurs revendications comprises entre 1 et 29, caractérisé par le fait que des chaînes ou des anneaux pneumatiques sont utilisés comme éléments de soutien.

31. Procédé basé sur le principe d'une ou de plusieurs revendications comprises entre 28 et 30, caractérisé par le fait que pour maintenir les éléments de soutien espacés les uns des autres, des membranes élastiques (19) sont utilisées.

32. Procédé basé sur le principe de la revendication 31, caractérisé par le fait que les membranes ( 19) sont des élastomères, des plastiques souples ou des toiles métalliques.

33. Procédé basé sur le principe d'une ou de plusieurs revendications comprises entre 24 et 32, caractérisé par le fait que les éléments de soutien ( 4, 14,15, 16, 17, 18, 24, 26, 27, 28, 29, 34, 46, 54) utilisés, sont soit des éléments mobiles par rapport à leur axe, soit des éléments fixes.

34. Procédé basé sur le principe de la revendication 31, caractérisé par le fait que les éléments de soutien (24) utilisés sont ceux intégrés dans un cylindre d'appui (12).

35. Procédé basé sur le principe d'une ou de plusieurs revendications comprises entre 1 et 34, caractérisé par le fait que les éléments de soutien (24) utilisés se présentent soit sous forme d'anneau soit sous forme de tranche.

36. Procédé basé sur le principe d'une ou de plusieurs revendications comprises entre 1 et 35, caractérisé par le fait qu'au niveau où s'exerce la pression, l'embossage doit s'appliquer sur un peu moins ou un peu plus de deux reliefs dans le sens d'avancée de la bande.

37. Procédé basé sur le principe d'une ou de plusieurs revendications comprises entre 1 et 23 ou entre 27 et 36, caractérisé par le fait qu'on utilise, pour l'embossage, un cylindre de pression (47, 55, 56) à surface profilée.

38. Procédé basé sur le principe des revendications 5 et 37, caractérisé par le fait qu'au moins deux cylindres de pression sont utilisés pour l'embossage, le premier, muni de noppes décalés les uns par rapport aux autres, permettant un embossage grossier, le second, un cylindre souple, permettant d'évider davantage encore les parois des reliefs.

39. Procédé basé sur le principe de la revendication 28, caractérisé par le fait que le diamètre extérieur de la vis sans fin est modifiable à l'aide d'un dispositif mécanique ou pneumatique.

40. Procédé basé sur le principe de la revendication 39, caractérisé par le fait qu'un des deux cylindres de pression présente une surface à noppes afin d'initier l'embossage.

41. Procédé basé sur le principe d'une ou de plusieurs revendications comprises entre 1 et 4, caractérisé par le fait qu'un ruban (41) tendu au dessus de la bande de matière exerce la pression nécessaire à l'embossage.

42. Procédé basé sur le principe d'une ou de plusieurs revendications comprises entre 1 et 22, 27 et 36, 38 et 41, caractérisé par le fait que la pression est exercée par un cylindre souple (47, 55, 56).

43. Procédé basé sur le principe de la revendication 42, caractérisé par le fait qu'on utilise un cylindre de pression (47) élaboré dans un matériau élastomère.

44. Procédé basé sur le principe d'une ou de plusieurs revendications comprises entre 1 et 44, caractérisé par le fait qu'on utilise un cylindre de pression pneumatique pour exercer la pression d'embossage.

45. Procédé basé sur le principe d'une ou de plusieurs revendications comprises entre 1 et 44, caractérisé par le fait que la bande de matière embossée est associée à une autre bande de matière embossée et/ou à une bande de matière lisse.

46. Procédé basé sur le principe d'une ou de plusieurs revendications comprises entre 37 et 45, caractérisé par un cylindre à surface profilée en forme de serpentin ou de zigzag.

47. Procédé basé sur le principe de la revendication 1, caractérisé par le fait que les cylindres (53) sont embossés à l'aide de deux cylindres de pression rotatifs.

48. Procédé basé sur le principe de la revendication 1, caractérisé par le fait que des cônes tronqués, ou autres bandes de matière minces de forme semblable, peuvent être embossées par des éléments de soutien, composés d'anneaux ou de cylindres spiralés souples ou rigides (61) et espacés les uns des autres; l'écart entre les éléments de soutien ainsi que l'épaisseur de la matière à embosser pouvant être déterminés de façon à obtenir un nombre de reliefs, décalés les uns par rapport aux autres, constant en tout point de la circonférence du cône tronqué ou de la pièce.

49. Procédé basé sur le principe de la revendication 48, caractérisé par la production de pièces de révolution.

50. Procédé basé sur le principe de la revendication 48 ou 49, caractérise par l'embossage avec des cylindres de pression souples à surface profilée à position angulaire et /ou à bombé adaptés.

51. Procédé basé sur le principe de la revendication 1, caractérisé par le fait que la bande de matière embossée est associée à une autre bande de matière embossée pour créer un matériau composite.

52. Procédé basé sur le principe de la revendication 51, caractérisé par le fait que de la bande de matière est doublée par coulage ou par soufflage sur un côté de la matière embossée (84).

53. Procédé basé sur le principe de la revendication 51, caractérisé par la production de matériaux composites stratifiés.

54. Procédé basé sur le principe de la revendication 1, caractérisé par le fait que deux bandes de matière embossées sont placées en décalage l'une par rapport à l'autre.

55. Procédé basé sur le principe de la revendication 1, caractérisé par le fait que la bande de matière embossée peut être associée à une autre pour former un récipient.

56. Procédé basé sur le principe de la revendication 1, caractérisé par le fait que la bande de matière embossée est fixée sur les murs ou sur les plafonds des bâtiments ou des installations faisant intervenir l'acoustique.
